(19) Europäisches Patentamt
European Patent Office
Office européen des brevets

(11) **EP 4 134 237 A1**

(12) **EUROPÄISCHE PATENTANMELDUNG**

(43) Veröffentlichungstag:
**15.02.2023 Patentblatt 2023/07**

(21) Anmeldenummer: **21191280.3**

(22) Anmeldetag: **13.08.2021**

(51) Internationale Patentklassifikation (IPC):
**B33Y 50/00** (2015.01)    **G06F 30/13** (2020.01)
**G06F 113/10** (2020.01)

(52) Gemeinsame Patentklassifikation (CPC):
**G06F 30/13; B33Y 50/00;** G06F 2113/10

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **PERI SE
89264 Weißenhorn (DE)**

(72) Erfinder:
• **LUTZ, Maximilian
90429 Nürnberg (DE)**

• **MACIEJEWSKI, Yannick
71717 Beilstein (DE)**
• **TORRINHA, Bruno
86381 Krumbach (DE)**
• **MEYER-BRÖTZ, Fabian
89312 Günzburg (DE)**

(74) Vertreter: **Schwarz, Claudia
Schwarz + Kollegen
Patentanwälte
Hermann-Schmid-Straße 10
80336 München (DE)**

(54) **STEUERUNG EINES 3D-DRUCKERS FÜR DIE ADDITIVE FERTIGUNG VON GEBÄUDEN**

(57)    In einem Aspekt betrifft die vorliegende Erfindung ein Computer-implementiertes Verfahren zur Ansteuerung eines 3D-Druckers (D) für ein additives Fertigungsverfahren, insbesondere ein Filament Printing, von Strukturen eines Bauwerkes mit Beton oder anderen Baustoffen umfassend folgende Schritte:

- Einlesen (S1) eines 3D-Modells über eine CAD Schnittstelle (I), in dem die Strukturen in Strukturdaten in einem ersten Konstruktionsformat identifizierbar repräsentiert sind;

- Einlesen (S2) von Druckerparametern (par) über eine Druckerschnittstelle (DS), die Anforderungen und/oder Konstruktionsvorgaben des 3D-Druckers (D) repräsentieren;

- Ausführen (S3) eines Struktur-Umrechnungsalgorithmus, der aus den in dem ersten Konstruktionsformat repräsentierten Strukturdaten, Filamentstrukturdaten in einem zweiten Konstruktionsformat für eine Filamentstruktur berechnet in Abhängigkeit von den eingelesenen Druckerparametern (par);

- Berechnen (S4) von Steueranweisungen (s) auf Basis der berechneten Filamentstrukturdaten und

- Übermittlung (S5) der berechneten Steueranweisungen (s) an den 3D-Drucker (D) zur Ansteuerung.

FIG. 2

EP 4 134 237 A1

**Beschreibung**

Die vorliegende Erfindung liegt auf dem Gebiet der additiven Fertigung im Bereich des Bauwesens und betrifft insbesondere ein Softwareprodukt zum Ansteuern eines 3D-Druckers zur additiven Fertigung von Bauwerken, Gebäuden und/oder deren Bauteilen.

Unter dem Begriff "additive Fertigung" (umgangssprachlich oft auch als 3D-Druck bezeichnet) werden unterschiedliche Fertigungsverfahren zusammengefasst, die sich grundlegend von konventionellen Herstellungsprozessen unterscheiden und zu völlig neuen technischen Möglichkeiten führen. Bauteile werden Schicht für Schicht aufgebaut und entstehen nicht wie bei herkömmlichen Verfahren durch Abtrag von Material.

Soll die additive Fertigung im Bereich des Bauwesens und/oder der Gebäudeerstellung angewendet werden, so sind spezifische Anforderungen und Bedingungen zu beachten. Zum einen unterscheidet sich das Material (z.B. Beton) von den typischen Materialien, die im 3D-Druck typischerweise angewendet werden (z.B. Kunststoff, Metall, Keramik) und muss bestimmte Anforderungen einhalten und auch die Abmessungen des 3D-Druckers mit seinen Bauteilen (Druckkopf etc.) und den erforderlichen Zusatzelementen haben weitaus andere Größendimensionen bzw. Abmessungen als etwa 3D-Drucker für z.B. den Werkzeugbau oder die Zahntechnik. Zum anderen basiert der 3D-Druck auf 3D-Modelldaten des zu fertigenden Bauteils. Im Bereich des Bauwesens werden die Planungsdaten für ein Gebäude von einem Planer, wie z.B. einem Architekten, mit einer entsprechenden digitalen Planungssoftware erstellt. Diese Planungsdaten können allerdings nicht unverändert als Eingangsdaten für einen 3D-Drucker verwendet werden, da der 3D-Drucker teilweise Zusatzinformationen benötigt und/oder teilweise abweichende Konstruktionsvorgaben voraussetzt. Die abweichenden Konstruktionsvorgaben können beispielsweise vorsehen, dass Filamentstrukturen gedruckt werden, während die Architekturplanungsdaten - abweichend davon - Vollstrukturen (z.B. Vollwände) vorsehen.

Die bisherigen 3D-Druckverfahren auf anderen Gebieten der Technik können nicht ohne Weiteres in die Baubranche übertragen werden. Zum einen unterscheidet sich Beton, das weltweit dominierende Baumaterial, hinsichtlich seiner Festigkeit und/oder Oberflächenqualität grundlegend von den üblichen 3D-Druckmaterialien wie Kunststoff, Metall oder Keramik. Zudem ergeben sich andere Anforderungen bezüglich der Dimension des Bauraums, welcher größer als das herzustellende Gebäude sein sollte.

Für einen automatisierten Prozess zur effizienten digitalen Fertigungsvorbereitung sind somit umfangreiche Anpassungsschritte erforderlich. Ein effizienter Fertigungsvorbereitungsprozess ist jedoch entscheidend für eine schnelle Umsetzbarkeit von 3D Betondruck Projekten sowie für die angestrebte Skalierung des Verfahrens. Insbesondere bei der Erstellung des 3D-Druckmodells besteht derzeit noch großer Optimierungsbedarf, da sich eine traditionelle Architektenplanung grundlegend von der Struktur eines druckbaren Gebäudemodells bzw. Datensatzes unterscheidet. Die Planungsdaten, die heute von einer Architekturplanung bereitgestellt werden, können somit in der Regel nicht für den 3D-Druck bzw. zur Erstellung eines Druckmodells für den 3D-Drucker verwendet werden und eine manuelle Remodellierung bzw. Umarbeitung der Planungsdaten zur Verwendung für einen 3D-Drucker ist sehr aufwendig und fehleranfällig.

Vor diesem Hintergrund hat sich die vorliegende Erfindung zur Aufgabe gestellt, die additive Fertigung auch auf die Erstellung von Gebäuden oder Bauwerken (Brücken, Stauwänden etc.) anwendbar zu machen und einen automatisierten Prozess zur Bereitstellung von Steuerdaten für einen 3D-Drucker zum Druck von Gebäuden oder Bauwerken bereitzustellen. Weiterhin sollen die Umsetzung von Daten aus einem Architekturmodell in ein 3D-Druckmodell automatisiert und fehlerminimiert werden.

Diese Aufgabe wird durch die beiliegenden unabhängigen Ansprüche gelöst, insbesondere durch ein computerimplementiertes Verfahren, durch einen Transformator, durch ein System und durch ein Computerprogrammprodukt.

In einem ersten Aspekt bezieht sich die Erfindung auf ein Computer-implementiertes Verfahren zur Ansteuerung eines 3D-Druckers für ein additives Fertigungsverfahren, insbesondere ein Filament Printing, von Strukturen eines Bauwerkes oder Gebäudes mittels flüssiger oder pulverförmiger druckbarer Baustoffe, umfassend folgende Schritte:

- Einlesen eines 3D-Modells über eine CAD Schnittstelle, insbesondere eines BIM-fähigen 3D-Modells, in dem die zu druckenden Strukturen in Strukturdaten in einem ersten Konstruktionsformat identifizierbar repräsentiert sind;
- Einlesen von Druckerparametern über eine Druckerschnittstelle, die Anforderungen und/oder Konstruktionsvorgaben des 3D-Druckers repräsentieren;
- Ausführen eines Struktur-Umrechnungsalgorithmus, der aus den in dem ersten Konstruktionsformat repräsentierten Strukturdaten, Filamentstrukturdaten in einem zweiten Konstruktionsformat für eine Filamentstruktur berechnet in Abhängigkeit von den eingelesenen Druckerparametern;
- Berechnen von Steueranweisungen auf Basis der berechneten Filamentstrukturdaten und
- Übermittlung der berechneten Steueranweisungen an den 3D-Drucker zur Ansteuerung oder Steuerung desselben.

Bei dem 3D-Drucker handelt es sich um einen solchen, der geeignet ist, im großen Maßstab (z.B. auch große) Gebäude oder Bauwerke (wie Brücken, Staudämme etc.) zu drucken und damit beispielsweise in einem Bereich von 5 bis 300m$^2$ zu drucken und agieren kann. Durch die großen Dimensionen hat der Drucker spezifische Anforderungen im Vergleich zu Druckern von z.B. Werkzeugen oder Implantaten im Medizinbereich. Dies zeigt sich insbesondere in einem deutlich aufwendigeren Materialmanagement für das zu verarbeitende Druckmaterial (z.B. 30 Tonnen Silo mit Förderpumpe bis zu 100 Bar Schlauchdruck) Der Druckkopf besitzt ein Reservoir für das ankommende 3D-Druckmaterial, von welchem das Material zum Ausbringungsort (3D-Druckdüse) befördert wird. Als Düse fungieren verschiedene Anbauteile wie z.B. feste Düsenöffnungen mit unterschiedlicher Breite (z.B. 2-15 cm), Düsenöffnungen mit festen oder steuerbaren Flügeln zum Glätten und/oder Ausrichten der Oberfläche (auch z.B. 2-15 cm Breite) und Anbaudüsen mit steuerbarer Düsenbreite für nicht-lineare Filamentbreiten (z.B. 5-60 cm). Der Drucker benötigt zum Drucken ein Druckmodell. Das Druckmodell ist in der Lösung des vorstehend genannten Problems in Filamentstrukturdaten repräsentiert. Die Filamentstrukturdaten sind Flächendaten. Die Filamentstrukturdaten sind insbesondere kein Volumendaten.

Bei der Struktur handelt es sich um ein bauliches Element oder ein strukturelles Bauteil eines Gebäudes oder eines anderen Baukörpers oder Bauwerkes in beliebiger Geometrie (z.B. als Wand, Decken und/oder Möbelstruktur oder Struktur für einen Kamineinlass). Die Struktur kann als vertikale Wandstruktur und/oder als horizontale Deckenstruktur ausgebildet sein. Vorzugsweise kann es sich bei der Struktur um eine vertikale Struktur handeln. Es können somit neben Wänden auch Decken gedruckt werden (bspw. als Fertigteil neben dem Standort des eigentlichen Hauses). Diese Decken können beliebig dick ausgebildet werden, indem die Filamente als Randabschalung dienen und anschließend mit Füllmaterial (z.B. Frischbeton) ausgegossen werden oder in Gänze 3D-gedruckt werden durch das flächige Drucken von Layerschichten.

Die druckbaren Baustoffe sind nicht auf eine bestimmte Klasse von Baustoffen festgelegt. In einer bevorzugten Ausführungsform der Erfindung soll ein fließfähiger und aushärtbarer Baustoff, insbesondere Beton und/oder Mörtel, als Baustoff verwendet werden und zwar in einer druckbaren Form. Dies setzt bestimmte rheologische Voraussetzungen voraus, mitunter der Viskosität als Maß der Fließfähigkeit und/oder das Fließverhalten Typischerweise kann eine dynamische Fließgrenze im Bereich zwischen 400 und 2000 Pa (Pascal) und/oder eine plastische Viskosität in einem Bereich zwischen 20 Pas und 70 Pas (Pascal Sekunde) liegen.

Bei den druckbaren Baustoffen kann es sich aber auch um Zementmörtel und/oder um druckbare Materialien, möglicherweise auch unter Beimischung von Fasern handeln, die als Bewehrung dienen, wie bspw. Carbonfasern oder Kunststoffmaterialgemischen. Die druckbaren Baustoffe können auch als 3D-Druckmaterial bezeichnet werden. Die druckbaren Baustoffe können Zuschläge, wie Sand, Kies, Bläh-Ton, Bläh-Glas und weitere feste Baumaterialien umfassen. Die druckbaren Baustoffe können Bindemittel wie Zement aber auch puzzolanhalte Materialien oder Geopolymere und/oder Zusatzstoffe bzw. Additive umfassen (je nach gewünschter Funktionalität, wie z.B. als Stabilisierer, Beschleuniger, Weichmacher, Viskositätsmodifizierer, Plastizitätsmodifizierer, Schwindreduzierer, Farbstoffe, Zusatzstoffe für eine Massenhydrophobierung etc.).

Das 3D Modell kann ein CAD-Modell oder ein Modell für den Gebäudebau sein. Das 3D-Modell ist vorzugsweise ein BIM-fähiges Modell (BIM: building information modelling). Es kann sich um ein Architektenmodell handeln. Vom Architekten kann z.B. eine Wand als Vollwand oder als eine Schalwand bzw. zwei oder mehr parallele Schalwände geplant werden. Es kann z.B. ein Autocad-Modell, Revit, ArchiCAD oder Allplan-Modell sein. Das 3D Modell berücksichtigt oder repräsentiert üblicherweise keine Druckerparameter. Das 3D Modell kennzeichnet sich dadurch, dass keine Vorgaben in Bezug auf den Drucker und/oder Anforderungen an die zu druckende Filamentstruktur enthalten sind. Im Unterschied dazu, sind die vorstehend genannten Parameter und Angaben in einem sogenannten "Druckmodell", das spezifisch für den 3D-Drucker ausgebildet ist, enthalten. Das Druckmodell kann direkt von dem 3D-Drucker verarbeitet werden.

Die Druckerparameter sind technische Kennzeichen des 3D-Druckers. Die Druckerparameter repräsentieren Anforderungen und/oder Konstruktionsvorgaben des 3D-Druckers. Die Druckerparameter können z.B. eine Düsenbreite und/oder einen Vorschub des Druckkopfes umfassen.

In einer weiteren bevorzugten Ausführungsform der Erfindung können die Druckerparameter z.B. ausgewählt sein aus der Gruppe aus: Layerhöhe, Abrundungsradius, Düsenversatz (in Druckrichtung) und/oder Layerzeit (indiziert die Dauer für eine vollständig gedruckte Schicht/Layer bzw. wann der Druckkopf wieder an derselben Koordinatenstelle ankommt. Daher ist dieser Wert ("Layerzeit") besonders relevant. Der Druckerparameter "Layerzeit" kann vorzugsweise automatisch berechnet werden in Abhängigkeit von einem Abbindeparameter, der die Abbindezeit des Betons charakterisiert. Der Abbindeparameter kann manuell über eine Benutzerschnittstelle eingegeben werden oder er kann aus einer Materialdatenbank ausgelesen werden. Vorzugsweise wird zur Berechnung der Layerzeit ein Layer-Algorithmus angewendet, der dazu bestimmt ist, die Layerzeit kleiner zu halten als die Abbindezeit des Betons oder des jeweiligen verwendeten druckbaren Baustoffes.

In einer weiteren bevorzugten Ausführungsform der Erfindung können die Druckerparameter z.B. ausgewählt sein aus der Gruppe aus: Druckgeschwindigkeit, Extrusionskoeffizient, Schlauchlänge, Mischwerkzeug und/oder Umgebungsbedingungen, wie Temperatur und/oder Feuchtigkeit etc. Der Extrusionskoeffizient gibt an, wie schnell sich eine Extruderschraube im Druckkopf dreht. Je nachdem, welche Werte der Struktur-Umrechnungsalgorithmus (z. B. drucken oder nicht drucken) ausgibt, werden die Aktoren zur Bewegung der Extruderschraube angesteuert.

Der Begriff "Filamentstruktur" bezieht sich auf die zu druckende Struktur, z.B. eine Wand, wie beispielsweise die Wand eines Gebäudes oder Teilwand oder eine Decke etc. Die Filamentstruktur kann z.B. als Filamentwand mit zumindest einem Filamentwandelement und vorzugsweise zumindest zwei oder mehr Filamentwandelementen ausgestaltet sein, die vorzugsweise beabstandet voneinander und noch bevorzugter im Wesentlichen parallel voneinander beabstandet angeordnet sind. In der Ausbildung als Filamentwandstruktur oder Filamentwandelement kann sie zwei oder mehr Wandelemente umfassen, die im Querschnitt Maße aufweisen, die im Wesentlichen den Maßen der zugehörigen aus dem 3D-Modell identifizierten Strukturen in dem ersten Konstruktionsformat entsprechen, bspw. einer im 3D-Modell geplanten Vollwand. Der Raum, der sich zwischen zumindest zwei Wandelementen, die beabstandet voneinander angeordnet sind, umgibt, kann beispielsweise mit Bewehrungen, Dämmmaterial, Beton, einer Filamentstruktur als "Infill", bspw. in Form einer Schlangenlinie oder Kombinationen davon aufgefüllt werden. In einer einfache Ausführungsform der Erfindung kann die berechnete Filamentstruktur auch nur aus einem Filamentelement (z.B. Wand) bestehen.

Filament Printing kennzeichnet den Druckvorgang zum Drucken von Filamentstrukturen. Das Druckverfahren kann vorzugsweise ein extrusionsbasiertes 3D-Betondruckverfahren sein, das auf einer extrusionsbasierten Verteilung des Betons beruht. Es können grundsätzlich unterschiedliche Druckverfahren für extrusionsbasierte Betondruckverfahren angewendet werden, die sich hauptsächlich in der Größe des abgelegten Filaments und der darauf aufbauenden Druckstrategie unterscheiden:

- Die Feinfilamentablage nach Loughborough-Verfahren,
- die Mittelfeinfilamentablage des Contour Crafting Concepts der University of Southern California und
- die Grobfilamentablage des CONPrint3D Konzepts der TU Dresden.

Hierzu sei auf die Veröffentlichung verwiesen: "A process classification framework for defining and describing Digital Fabrication with Concrete", https://doi.org/10.1016/j.cemconres.2020.106068 https://www.sciencedirect.com/science-/article/pii/S0008884619316709. Bei allen auf Extrusion basierenden Druckverfahren wird "ein vorgemischtes Material durch eine Düse bei vorgegebenen Druckraten an spezifizierten Koordinaten abgelegt" (Mechtcherine, Viktor; Nerella, Venkatesh Naidu (2018): 3 - D - Druck mit Beton: Sachstand, Entwicklungstendenzen, Herausforderungen. In: Bautechnik 95 (4), S. 275-287. DOI: 10.1002/bate.201800001). Im Falle von Beton muss diese Definition jedoch leicht differenziert werden, da hier das Extrusionsresultat nicht ausschließlich von der Form der Düsenöffnung begrenzt wird. Vielmehr wird das weiche Frischbetongemisch aus der Düse herausgepresst und zerfließt anschließend aufgrund seines Eigengewichts zu einer abweichenden Filamentgeometrie (Mechtcherine, Viktor; Nerella, Venkatesh Naidu (2018): 3 - D - Druck mit Beton: Sachstand, Entwicklungstendenzen, Herausforderungen. In: Bautechnik 95 (4), S. 275-287. DOI: 10.1002/bate.201800001.). Um ein optimales Druckergebnis zu erhalten, muss der Druckablauf möglichst kontinuierlich erfolgen. Hierfür eignen sich abgerundete Ecken und/oder Kanten, da der Druckkopf diese ohne Unterbrechung abfahren kann. Die Bereitstellung der Steuerdaten zur Ansteuerung des 3D-Druckers für diese abgerundeten Ecken und/oder Kanten wird gemäß diesem Vorschlag mittels eines Radius-Algorithmus umgesetzt.

Der Radius-Algorithmus bestimmt im Modell zu druckende Kurven, d. h. vertikale Kanten werden abgerundet. Diese Kurven werden vom Druckkopf derart abgebildet, dass die Druckdüse am unteren Ende des Druckkopfs entsprechend angesteuert wird und sich mit der Kurve dreht, quasi um die z-Achse. Die Druckdüse kann z.B. einen rechteckigen Querschnitt aufweisen. Würde sich die Druckdüse nicht drehen und der Druckkopf um eine Kurve fahren, würde die Breite der Filamentstrukturen nicht mehr stimmen. Falls die Druckdüse jedoch bspw. einen runden Querschnitt hat, muss sich die Düse ggf. nicht drehen, sondern lediglich der Druckkopf so angesteuert werden, dass die Kurve wie aus dem Modell berechnet, abgefahren und gedruckt wird. In jedem Fall muss der Druckkopf so gesteuert werden, dass eine Kurve gedruckt wird.

Durch eine zunehmende Anzahl von aufeinander abgelegten Schichten wird eine vertikale Extrusion erzeugt. Hierbei spielt die Geschwindigkeit der Materialablage eine wichtige Rolle hinsichtlich der Schichtenbindung und Gleichmäßigkeit. Eine zu schnelle Ablage führt zu einem unregelmäßigen und unsauberen Extrusionsergebnis, da das erhöhte Eigengewicht der aufaddierten oberen Schichten die unteren Schichten seitlich entweichen lässt, wenn diese noch keine ausreichende Festigkeit besitzen. Im Gegensatz dazu kann eine zu langsame Ablage verhindern, dass zwischen den einzelnen Schichten eine ordnungsgemäße Adhäsion entsteht, da die jeweils untere Schicht bereits zu weit abgebunden ist und keine Verbindung mit der frisch abgelegten Schicht eingeht. Dies kann eine unzureichende Stabilität und Langlebigkeit der Bauteile nach sich ziehen (Meyer-Brötz, Fabian (2019): 3D Construction Printing, 2019).

Des Weiteren sind "die Maßgenauigkeit und Formstabilität [...] entscheidend von den rheologischen Eigenschaften des gedruckten Betons abhängig" (Mechtcherine, Viktor; Nerella, Venkatesh Naidu (2018): 3 - D - Druck mit Beton: Sachstand, Entwicklungstendenzen, Herausforderungen. In: Bautechnik 95 (4), S. 275-287. DOI: 10.1002/bate.201800001). Daher muss dieser Parameter bei der Übersetzung der Planungsdaten aus dem CAD-Modell (des Architekten) in den vom Konstruktionsdrucker verarbeitbaren G-Code berücksichtigt werden, um eine optimale Steuerung des Druckkopfs zu gewährleisten.

In einer bevorzugten Ausführungsform der Erfindung können die Filamentstrukturdaten als Flächendaten repräsentiert sein. Die Fläche bezieht sich dabei auf die Fläche, die von der Mittellängsachse der zu druckenden Struktur gebildet wird. Bei einer vertikalen Wandstruktur ist dies die vertikale Fläche, die durch die Mittelebene der Wandstruktur aufgespannt wird und damit die Wandstruktur in Bezug auf die Dicke hälftig teilt.

Das erste und/oder zweite Konstruktionsformat können übereinstimmen. Vorzugweise wird das erste und/oder zweite Konstruktionsformat jedoch nicht (exakt) übereinstimmen. Bei dem Konstruktionsformat kann es sich z.B. um ein Konstruktionsschema (z.B. Wandkonstruktionsschema, wie Vollwand/Schalwand) handeln.

Das erste Konstruktionsformat kann z.B. ausgelegt sein, um eine Vollwand zu repräsentieren, vorzugsweise mit den Angaben Länge, Breite Höhe.

Das zweite Konstruktionsformat kann vorzugsweise ausgelegt sein, um eine Filamentstruktur zu repräsentieren. Zur exakten Spezifikation der Filamentstruktur kann das zweite Konstruktionsformat mitunter folgende Filamentstrukturparameter umfassen: Anzahl der Filamentstrukturen, Dicke der Filamentstrukturen, Zwischenraum bzw. (je nach Anzahl) Zwischenräume, Füllstoff zur Auffüllung der Zwischenräume etc.

Generell gilt, dass zur Berechnung der Filamentstruktur weitere Parameter und Konstruktionsangaben erforderlich sind, die teilweise von den Druckerparametern abhängig sind, um die jeweilige Struktur drucken zu können. Üblicherweise stimmen die Strukturdaten in dem ersten Konstruktionsformat nicht exakt mit den Filamentstrukturdaten in dem zweiten Konstruktionsformat überein. Dies gilt auch selbst dann, wenn der Architekt die Struktur, z.B. die Wand, bereits als Filamentwand geplant hat. In diesem Fall unterscheiden sich die berechneten Filamentstrukturdaten von den Strukturdaten (aus dem CAD Modell) u.a. durch die Anpassungsfunktionen zur Berücksichtigung der Druckerparameter und durch die Transformationen in Bezug auf die Radien (Radius-Algorithmus). In den meisten Fällen unterscheiden sich die Filamentstrukturdaten von den Strukturdaten kumulativ oder alternativ darin, dass der Architekt mit Volumendaten plant, während das Druckmodell jedoch Flächendaten benötigt. In einem ersten Beispiel plant der Architekt die ganze Struktur, insbesondere Wand, als Vollwand, also als Volumenkörper in 3D. In einem zweiten Beispiel plant der Architekt die zu druckenden Filamente (also eine Hohlwand), aber die Filamente sind nicht als Flächendaten, sondern als Volumenkörper im 3D-Modell hinterlegt. Deshalb muss eine Transformation der Strukturdaten in Filamentstrukturdaten, die vom Drucker verwendbar sind und in Flächendaten vorliegen, erfolgen.

Flächendaten für eine Filamentstruktur können grundsätzlich aus einer oder mehreren Strukturen berechnet werden. Insbesondere bei kleinen Strukturen, wie z.B. bei Laibungen und/oder Stürzen hat es sich als vorteilhaft erwiesen, dass die Strukturen zum Teil vor der Berechnung miteinander verbunden werden zu einem Strukturabschnitt, z.B. können einzelne Wandabschnitte einer Struktur zu einer zusammenhängenden Wandstruktur verbunden werden. Ebenso kann eine große Struktur in einzelne Struktursegmente untergliedert werden. Eine Unterteilung in Drucksegmente oder -abschnitte ist abhängig von der Layerzeit. Die Layerzeit wiederum ist abhängig von dem verwendeten Material. Unterschiedliche Materialeien haben unterschiedliche Abbindezeiten. Die Layerzeit wird vorzugsweise so bestimmt, dass sie die Abbindezeit des Materials nicht überschreitet, und vorzugweise ist die Layerzeit geringer als die Abbindezeit. Die Layerzeit ist weiterhin abhängig von der/den gedruckten Bauteilgeometrie/n, der Bewegung des Druckkopfes zwischen den Bauteilgeometrien und der Druckgeschwindigkeit. Die Layerzeit L kann somit verstanden werden als Funktion f:

$$L: f\ (m,\ p,\ g,\ v),$$

wobei m der Materialtyp, p der Druck, g die Geometrie mit einer Druckkopfbewegung, v die Geschwindigkeit des Druckkopfes ist. Ein weiterer relevanter Einflussparameter, der gemäß einer bevorzugten Ausführungsform der Erfindung bei der Berechnung der Layerzeit berücksichtigt werden kann, ist der sog. "Travel move". Darunter soll die Bewegung des Druckkopfes zwischen jeweils zwei zu druckenden Abschnitten oder Geometrien bzw. die damit einhergehenden Zeitphasen verstanden werden, in denen kein Material extrudiert wird. Wenn beispielsweise zwei separate Strukturelemente (z.B. zwei Säulen) gedruckt werden sollen, die als Strukturelement in sich abgeschlossen sind, instruieren die berechneten Steueranweisungen den Druckkopf derart, dass dieser quasi von dem ersten Strukturelement (erste Säule) zum zweiten Strukturelement (zweite Säule) hin und her oszillieren muss. Die Bewegung des Druckkopfes wird über die Steueranweisungen und insbesondere über einen Bewegungsabschnitt definiert. Die Steueranweisungen umfassen darüber hinaus einen Materialabschnitt, der definiert, dass Material nur an den Stellen extrudiert wird, an denen die jeweilige Struktur/Säule entstehen soll. Je nach der Entfernung der beiden Strukturen voneinander und damit je nachdem welche Distanz der Druckkopf zu überbrücken hat, ist der "Travel Move" länger oder kürzer und hat so bei gleicher Geschwindigkeit ein größerer oder kleinerer Einfluss auf die Layerzeit.

Die Druckgeschwindigkeit gibt an, wie schnell sich der Druckkopf im Raum bewegt, z.B. ca. 1cm/s bis 100cm/s.

Die Wandstruktur, die mittels des Struktur-Umrechnungsalgorithmus berechnet wird, muss von der Druckdüse des Druckkopfes entsprechend abgefahren werden (Bewegungsabschnittsdaten) und die Struktur muss aus dem Material gedruckt/hergestellt werden (Materialabschnittsdaten).

Dazu ist es vorgesehen, dass Aussparungen berechnet werden. Durch die im Modell enthaltenen Aussparungen, wird die Druckdüse so angesteuert, dass sie gezielt an bestimmten Stellen druckt und nicht druckt (eben dort, wo Aussparungen sind). Bei Aussparungen erfolgt somit eine spezifische Ansteuerung der Druckdüse zum Aussetzen des Druckmaterials.

Der Struktur-Umrechnungsalgorithmus dient zur Berechnung der Filamentbreite. Abhängig von der gewählten Breite der physischen Druckerdüsenöffnung verändert sich die digital geplante Filamentbreite und die für das Druckmodell relevante Lage der Filamentmittelachsen. In einer bevorzugten Ausführungsform der Erfindung ist es deshalb vorgesehen, auf einer Benutzerschnittstelle (User Interface, UI) die Druckerdüse zu spezifizieren. Daraus wird ein Druckerdüsenbreitendatensatz erstellt. Kumulativ (zum Zwecke der Verifikation der manuellen Eingabe der Düsenbreite) oder alternativ kann der Druckerdüsenbreitendatensatz auch von einer Datenbank oder aus einem Speicher (z.B. des Druckers) eingelesen werden. Aus diesem Druckerdüsenbreitendatensatz berechnet der Struktur-Umrechnungsalgorithmus automatisch die Filamentbreite und bestimmt die Lage der Filamentmittelachsen. Eine breitere Druckerdüse führt zu breiteren Filamentstrukturen und in Folge zu geringen Abständen zwischen den Filamentstrukturen bei mehr-filamentigen Strukturen.

Kumulativ oder alternativ dient der Struktur-Umrechnungsalgorithmus zur Berechnung von Aussparungsdetails. Die Aussparungsdetails sind u. a. abhängig von der Düsenbreite und werden auch wieder über die Druckdüse gedruckt. Berechnete Laibungen, die orthogonal zur Filamentachse verlaufen und zugehörige Supportstrukturen (damit die orthogonalen Laibungen bspw. nicht herunterfallen), müssen mittels der Druckdüse gedruckt werden. Für die Aussparungen und für die einzulegenden Stürze oberhalb der Aussparungen werden Abzugskörper erstellt. Hier wird die Druckdüse dann gestoppt, sodass nicht gedruckt bzw. kein Material abgelegt wird (Materialabschnitt der Steueranweisungen).

Kumulativ oder alternativ berechnet der Struktur-Umrechnungsalgorithmus die Druckerkonfiguration. Aus dem finalen Modell kann die optimale Druckerkonfiguration (LängexBreitexHöhe des Bauraums) errechnet werden, die Druckdauer/Layerzeit und/oder die Menge an Druckmaterial ermittelt werden. Dazu werden Druckerkonfigurationsdaten erstellt.

Kumulativ oder alternativ dient der Struktur-Umrechnungsalgorithmus zur Vermeidung von Düsenversatz. In einer bevorzugten Ausführungsform der Erfindung umfasst der Struktur-Umrechnungsalgorithmus dazu eine Düsenversatzvermeidungsfunktion. Bei berechneten positiven Flächendaten wird die Druckdüse angesteuert, um die Strukturen zu drucken. Bei Aussparungen wird die Druckdüse so angesteuert, um an diesen Stellen nicht zu drucken. Wenn die Druckdüse angesteuert wird, dass diese gestoppt wird, kann in vielen Fällen nicht verhindert werden, dass trotzdem noch Material nachläuft und somit Material aufgebracht wird, wenn keines aufgebracht werden sollte (Düsenversatz), bspw. wenn sich noch Material in der Düse befindet und dieses nachtropft oder andere Verzögerungen zwischen Stoppsignal und tatsächlichem Stopp (kein Auftragen von Material). Demzufolge könnte eine Aussparung ggf. nicht mehr die korrekte Größe haben bzw. ungenau sein, da um die Aussparung herum mehr Material ist, als es sein sollte. Dies kann besonders bei kleinen Aussparungen, bspw. für TGS Installationen (Elektro, Steckdosen) etc. kritisch sein, da ggf. keine Steckdose mehr eingesetzt werden können.

Die Düsenversatzvermeidungsfunktion ändert an den als kritisch detektierten Positionen (alle Positionen, die an eine Aussparung angrenzen) die abzufahrende Trajektorie der Druckdüse (Änderung des Bewegungsabschnittes), 3Dindem an einem ersten Ende der zu druckenden Struktur, auf das - in Druckrichtung gesehen - eine Aussparung folgt, die Druckdüse von ihrer berechneten Linearbewegung abweicht (bzw. entsprechend angesteuert wird) und eine z.B. orthogonal nach innen weisende Bewegung in Richtung des Hohlraums der Wandstruktur ausführt. Dies hat zur Folge, dass ein überschüssiger aus der Druckdüse entweichender Rest des Druckmaterials nicht in Längsrichtung, sondern z.B. orthogonal dazu, in den Hohlraum der Wand abgelegt wird. Kurze Arme bzw. Stumpen von Restmaterial, das nach instruiertem Druckstopp aus der Druckdüse entweicht, wird nicht linear, sondern abgewinkelt (z.B. orthogonal) in einem Hohlraum (der Wandstruktur) abgelegt. Die Düsenversatzvermeidungsfunktion kann invers auch für ein zweites Ende der Aussparung angewendet werden, um sicherzustellen, dass nach erfolgten Druckstart auch Material aus der Düse austritt und nicht erst aus den Versorgungsleitungen bereitgestellt werden muss, bevor es von der Druckdüse abgelegt werden kann. Auch hier kann es vorgesehen sein, dass die Druckdüse eine Zusatzbewegung in und aus dem Hohlraum der Struktur ausführt. Die Zeitphase zur Ausführung der Zusatzbewegung ist so bemessen, dass sicher ausreichend Druckmaterial in der Druckdüse bereitsteht, wenn diese das zweite Ende der Aussparung erreicht hat.

In einer bevorzugten Ausführungsform der Erfindung sind die Steueranweisungen in einem G-Code repräsentiert oder in einen G-Code transformierbar, der von einer Steuerplatine oder einer Steuereinheit des 3D-Druckers eingelesen und direkt prozessiert werden kann. Dies hat den technischen Vorteil, dass keine weiteren Umrechnungsschritte ausgeführt werden müssen und die Steueranweisungen direkt von dem 3D-Drucker eingelesen und verarbeitet werden können. Die Steueranweisungen können direkt von dem 3D-Drucker prozessiert werden. Die Steueranweisungen können zumindest zwei Abschnitte umfassen:

1. einen ersten Abschnitt, der als Bewegungsabschnitt fungiert und der die Bewegung (die abzufahrende Bahn einer Druckdüse des Druckkopfes des 3D-Druckers) definiert. Der Bewegungsabschnitt kann kumulativ oder alternativ weitere bewegungsbezogenen Parameter umfassen, wie z.B. eine Geschwindigkeit, eine Beschleunigung, Ruck etc. Alternativ oder kumulativ kann der Bewegungsabschnitt vorzugsweise auch einen Drehabschnitt umfasse, der definiert, wie sich eine Druckdüse des Druckkopfes bezogen auf einen Punkt oder einen Abschnitt der Trajektorie drehen muss. Der Drehabschnitt kann insbesondere einen Drehwinkel und Drehrichtung umfassen.

2. einen zweiten Abschnitt, der als Materialabschnitt fungiert und der definiert, wie schnell wieviel Material und ob überhaupt Material an welcher Position auf der Druckbahn abzulegen ist.

Die Steueranweisungen dienen zur Steuerung (Instruktion) des 3D-Druckers zum additiven Herstellen der Strukturen des Bauwerkes durch den 3D-Drucker gemäß den Vorgaben aus dem über die CAD Schnittstelle eingelesenen 3D-Modells (das z.B. von einem Architekten stammen kann).

In einer weiteren bevorzugten Ausführungsform der Erfindung umfasst das Verfahren und insbesondere das Berechnen von Steueranweisungen ein sogenanntes "Slicing" der zu druckende Struktur. "Slicing" bezeichnet hier eine Segmentierung der zu druckenden Struktur. Das Slicing erfolgt durch Ausführen eines Slicingalgorithmus, der für die berechneten Filamentstrukturdaten für ausgewählte Strukturen in Abhängigkeit von den eingelesenen Druckerparametern und/oder in Abhängigkeit von Vorgaben aus dem eingelesenen 3D-Modell Slicingdaten berechnet, die insbesondere eine Layerhöhe definieren.

Slicing bezieht sich somit auf eine Untergliederung der zu druckenden Struktur. Das Slicing ist typischerweise von einem Typ des 3D-Druckers abhängig und/oder vom verwendeten Baustoff (z.B. hinsichtlich Viskosität und Abbindezeit). Das Slicing kann z.B. in einer horizontalen und/oder vertikalen Ebene und/oder nach spezifischen räumlichen Vorgaben ausgeführt werden und dient zur Unterteilung eines Druckabschnittes. So kann es vorzugsweise vorgesehen sein, eine Slicinghöhe bzw. eine Layerhöhe nach Aushärtungsvorgaben des Materials zu definieren. Dies hat den technischen Effekt, dass das Verfahren sehr spezifisch an den jeweiligen Anwendungsfall und die Vorgaben vor Ort angepasst werden kann.

Beim Slicing werden die Filamentstrukturdaten (bzw. das flächenbasierte Druckmodell) in eine spezifische Anweisungsliste für den 3D- Drucker umgewandelt. Dabei wird das Modell in einem STEP- oder IGS-Format in eine Slicing Software importiert und dort die vertikalen Flächen in horizontale Pfade unterteilt, welche die lineare Bewegung des Druckkopfes vorgeben. Je nach Typ des 3D-Druckers, können anschließend weitere Einstellungen wie die genutzte Düsenbreite und Druckgeschwindigkeit vorgenommen werden. Aus dieser Information wird eine sogenannte G-Code-Datei erzeugt, die über die Web-Schnittstelle von einer Steuerplatine des 3D-Druckers gelesen und interpretiert werden kann. Die Slicingsoftware bzw. der Slicingalgorithmus kann direkt auf dem 3D-Drucker implementiert sein.

In einer vorteilhaften Weiterbildung der Erfindung ist es vorgesehen, dass Filamentstrukturparameter, insbesondere eine Breite jeweils einer zu berechnenden Filamentstruktur und/oder eine Layerhöhe für ein Slicing der Filamentstruktur, über entsprechende Konfigurationsfelder auf einer Benutzerschnittstelle konfigurierbar ist/sind. Damit wird die Flexibilität und auch die Anwendbarkeit des Verfahrens verbessert. Kumulativ oder alternativ kann der Struktur-Umrechnungsalgorithmus auf Basis der Filamentstrukturparameter ausgeführt werden.

In einer weiteren bevorzugten Ausführungsform der Erfindung können die Druckerparameter eine Düsenbreite und/oder eine Druckgeschwindigkeit des Druckkopfes, eine Layerhöhe, ein Abrundungsradius, Düsenversatz und/oder Layerzeit, Druckgeschwindigkeit (also der Vorschub bzw. die Geschwindigkeit, mit der der Druckkopf bewegt wird), Extrusionskoeffizient, Schlauchlänge, Mischwerkzeug (z.B. Durchlaufmischer, Tellermischer, Doppelwellenmischer) und/oder Umgebungsbedingungen, wie Temperatur und/oder Feuchtigkeit umfassen. Bei dem Düsenversatz handelt es sich um einen Versatz zwischen Düse und Druckkopf. Der Mittelpunkt des Druckkopfs muss nicht der Mittelpunkt der Druckdüse unten am Druckkopf sein. Dies ist insbesondere dann wichtig, wenn nah an bestehende Strukturen herangedruckt werden soll. Wenn zusätzlich die Druckdüse in horizontale Richtung drehbar ist (in Relation zum Druckkopf), so muss sich beim Druck um eine Kurve das gesamte Portal entsprechend mitbewegen, wenn der Mittelpunkt der Düse nicht der Mittelpunkt des Druckkopfes ist.

Der Struktur-Umrechnungsalgorithmus dient generell zur Modellumsetzung von dem CAD-Architekturmodell in das druckbare Modell bzw. "Druckmodell". Die Umsetzung der Strukturdaten (insbesondere Volumendaten) aus dem CAD Modell in Filamentstrukturdaten (insbesondere Flächenmodell) erfolgt in Abhängigkeit von den Druckerparametern. Die Druckerparameter fließen vorzugsweise an verschiedenen Stellen in den Algorithmus ein. Die Düsenbreite wird bspw. häufig halbiert, um die Filamentmittelachse parallel zu einer Wandgrenze zu erzeugen.

Bei einem längeren Schlauch (kann von wenigen Metern bis mehr als hundert Meter variieren) erhärtet das zu druckende Material schon auf dem Weg zur Druckdüse. Entsprechend muss die Lagenzeit reduziert werden, in dem entweder die Druckgeschwindigkeit erhöht wird oder die zu druckende Länge im jeweiligen Druckabschnitt reduziert wird, um das gewünschte Lagenbild zu erzielen.

In einer bevorzugten Ausführungsform der Erfindung können die Filamentstrukturdaten mittels eines BREP-Verfahrens (Boundary Representation, Oberflächendarstellung) und/oder mittels eines CSG Verfahrens (Constructive Solid Geometry, Boolesches Geometriemodell) erzeugt werden. Diese Verfahren dienen zur standardisierten digitalen Repräsentation von dreidimensionalen (geometrischen) Objekten.

In einer weiteren bevorzugten Ausführungsform der Erfindung kann das Verfahren einen Radius-Algorithmus umfassen, der für alle oder ausgewählte benachbarte Strukturelemente, die einen Verbindungsbereich, insbesondere eine Verbindungskante, aufweisen, einen Radius berechnet, über den die beiden benachbarten Strukturelemente beim Druckvorgang verbunden werden. Dies hat den Vorteil, dass automatisch abgerundete Ecken und/oder Kanten modelliert werden, die vom 3D-Drucker umsetzbar sind. Der Abrundungsradius sollte rein geometrisch für einen sauberen Druckvorgang größer oder gleich der Hälfte der Düsenbreite sein, um Überlagerungen an den Kanten zu vermeiden.

In einer bevorzugten Ausführungsform der Erfindung wird als 3D-Drucker ein Portaldrucker eingesetzt. Das Verfahren ist jedoch grundsätzlich unabhängig von einem Typ des Druckers. Der 3D-Drucker kann grundsätzlich als Gantry-Drucker ausgebildet sein oder als ein Portalkran. Weiterhin können auch andere verschiedene Druckertypen zum Einsatz kommen, wie einen Seilroboter, einen ein einarmiger oder mehrarmiger Roboter, ein Roboter der an einer Maststruktur befestigt ist oder weitere Varianten.

Die Filamentstrukturelemente können parallel oder im Wesentlichen parallel zueinander angeordnet sein. Es kann auch sein, dass zumindest ein Filamentstrukturelement, beispielsweise ein mittleres Filamentstrukturelement das zwischen dem Außenfilament und dem Innenfilament angeordnet ist, zumindest in einem Teilbereich bezogen auf eine Druckachse (die definiert wird über die Druckrichtung bzw. über die axiale Bewegung des Druckkopfes) in einem Winkel, insbesondere in einem Winkelbereich zwischen 0° und 90° in Bezug auf das Außenfilament und/oder das Innenfilament angeordnet ist. Damit können Wände gedruckt werden, die aus zwei äußeren parallelen Filamentflächen bestehen und im Inneren der Struktur zumindest ein weiteres Filament vorgesehen ist, das in der Draufsicht ein Sinusprofil, ein Zickzackprofil oder ein Rechteckprofil hat oder das sich nicht zwangsläufig mittig zwischen den beiden Außenwänden befinden muss, sondern auch außermittig angeordnet sein kann, um z.B. zwei unterschiedlich breite Hohlkammern zur Auffüllung mit Dämmmaterial zu bilden.

Beispielsweise kann also eine dreiteilige Filamentstrukturwand gebildet werden, mit einem Außenfilament und einem dazu parallel angeordneten Innenfilament und einem dazwischen angeordneten Zwischenfilament, das entweder parallel verlaufen kann oder in einem vordefinierbaren Muster, z.B. Zick-Zack oder entsprechend einer Sinus-Schwingung oder entsprechend einer Treppenfunktion. Dabei können die Abstände von der Zwischenfilamentwand von den jeweils benachbarten Filamentwänden konfiguriert werden. Dies kann über eine Benutzerschnittstelle in einer Konfigurationsphase erfolgen.

In einer bevorzugten Ausführungsform der Erfindung kann die Filamentstruktur zumindest ein oder zwei Filamentstrukturelement(e) umfassen, mit zumindest einem Außenfilament zur Ausbildung einer äußeren Gebäudebegrenzung (Außenwand) und zumindest einem Innenfilament (zur inneren Abtrennung von Räumen oder zur Abgrenzung einer Außenwand zum Innenraum des Gebäudes). Eine Außenfläche des Außenfilamentes und eine Außenfläche des Innenfilamentes können im gedruckten Zustand einen Abstand voneinander aufweisen, der einer Breite der Struktur aus dem eingelesenen 3D-Modell entspricht. Dies trifft insbesondere bei zwei-filamentigen oder mehrfilamentigen (mehrschaligen) Wandstrukturen zu. Alternativ oder kumulativ kann die Filamentstruktur z.B. auch eine Decke oder ein Deckenelement sein. Das Innenfilament ist dann auf einer dem Innenraum zugewandten Seite und das Außenfilament auf einer dem Innenraum abgewandten Seite angeordnet. Die Decke oder ein Deckenabschnitt kann bspw. in einer Draufsicht als geschlossenes Rechteck gedruckt werden. In diesem Fall gibt es kein Innenfilament. Dann würde der Abstand zwischen der Außenfläche eines ersten Außenfilaments und der Außenfläche eines zweiten Außenfilaments der Breite der Struktur aus dem eingelesenen 3D-Modell entsprechen.

In einer bevorzugten Ausführungsform der Erfindung ist das Verfahren und insbesondere der Struktur-Umrechnungsalgorithmus und/oder ein Abzugskörper-Algorithmus, ein Radius-Algorithmus, ein Slicingalgorithmus und/oder ein Detailaussparungsalgorithmus mit einer visuellen Programmiersprache, insbesondere mit Rhino von Grasshopper implementiert, die auf einer 64-Bit Windows Anwendung lauffähig ist. Grundsätzlich kann das computerimplementierte Verfahren auch hart codiert werden, so dass die automatisierte Umsetzung von 3D-Modelldaten (Planungsdaten, z.B. des Architekten) in Filamentstrukturdaten, die von einem 3D-Drucker in Steueranweisungen umgesetzt werden können, auch unabhängig von der visuellen Programmierschnittstelle in einer userfreundlichen (CAD-)Umgebung angewendet werden kann.

In einer bevorzugten Ausführungsform der Erfindung werden bei dem Verfahren neben den Steueranweisungen auch Visualisierungsdaten, insbesondere zur 3D-Visualisierung eines zu druckenden Baukörpers aus den berechneten Filamentstrukturdaten erzeugt. Dies kann vorteilhafterweise als Verifikationsschritt, zur Ausgabe auf einem User Interface, UI, dienen. Damit kann die Sicherheit und Zuverlässigkeit des Verfahrens durch das Vorsehen einer Korrekturschleife bzw. einer Korrekturoption verbessert werden. Vorzugsweise können die erzeugten Visualisierungsdaten in einem standardisierten Format, insbesondere DWG und/oder IFC, exportierbar und an externe Instanzen übertragbar sein.

In einer weiteren bevorzugten Ausführungsform der Erfindung kann das Verfahren zumindest einen der folgenden Schritte umfassen:

- Ausführen eines Abzugskörper-Algorithmus, der Aussparungen in den Strukturen definiert und darauf basierend Aussparungsvolumendaten berechnet in Abhängigkeit von den eingelesenen Druckerparametern; wobei die berechneten Aussparungsvolumendaten als Schnittkörper für die Filamentstrukturdaten zur Berechnung derselben dienen und/oder

- Koordinatentransformation der berechneten Daten, insbesondere der berechneten Filamentstrukturdaten, in ein Koordinatensystem des 3D-Druckers.

Der Abzugskörper-Algorithmus kann als Zusatzmodul angewendet werden. Bspw. ist es denkbar, Gebäude oder Bauwerke (z.B. Hallenwände) oder Strukturen oder Strukturteile (z.B. Decken) von Gebäuden zu drucken, die keine Aussparungen aufweisen. Deshalb ist dieses Modul fakultativ und kann bei Bedarf zugeschaltet werden und nicht zwingend notwendig. Die überwiegende Anzahl von Druckaufträgen wird allerdings Aussparungen in unterschiedlicher Form aufweisen (sei es als Tür, Fenster und/oder Installationsaussparung etc.).

In einer bevorzugten Ausführungsform der Erfindung kann ein zusätzlicher Subtraktions-Verfahrensschritt ausgeführt werden, indem die berechneten Aussparungsvolumendaten von den berechneten Filamentstrukturdaten subtrahiert werden, um positive Flächendaten für die zu druckende Struktur bereitzustellen. Diese positiven Flächendaten repräsentieren alle Strukturbereiche, insbesondere Wandbereiche, die keine Aussparungen aufweisen (in denen also Material gedruckt wird). Die Aussparungsvolumendaten dienen als 3D-Schnittkörper bei der Berechnung der Filamentstrukturdaten. Die Aussparungsvolumendaten können vorzugsweise auch auf einem UI ausgegeben werden. Dies hat den Vorteil einer zusätzlichen Verifikation. Auch kann ein Plausibilitätscheck ausgeführt werden, um z.B. sicherzustellen, dass nicht zwei unterschiedliche Aussparungsvolumendaten an übereinstimmender Position vorliegen. So sind beispielsweise eine Aussparung für eine Türe und eine Aussparung für ein Fenster üblicherweise nicht positionsidentisch vorgesehen. Hier kann eine Verifikationsnachricht an den Anwender ausgegeben werden, der dann bestätigen oder verwerfen kann.

In einer bevorzugten Variante der Erfindung führt der Abzugskörper-Algorithmus eine Differenzoperation aus. Die Differenzoperation kann von einem Differenzalgorithmus ausgeführt werden, um von den berechneten Flächendaten (Filamentstrukturdaten in dem zweiten Konstruktionsformat) Aussparungsvolumendaten zu subtrahieren, um die zu druckende vertikale Struktur zu bestimmen. Das Ergebnis der Differenzoperation sind also die Filamentstrukturdaten in dem Konstruktionsformat, so wie diese gedruckt werden sollen. Die Filamentstrukturdaten können somit auch Aussparungen beinhalten. Dies hat den technischen Effekt, dass positive Flächendaten berechnet werden, die die Summe aller Bereiche der zu druckenden Struktur repräsentieren, also z.B. alle Wandbereiche einer Wandstruktur, in der eine Türe und/oder ein Fenster und/oder sonstigen Aussparungen, z.B. zur Verlegung von Elektrik- oder Sanitärleitungen, ausgebildet sein können. Die berechneten positiven Flächendaten können vorzugsweise auf einer Benutzerschnittstelle zur Verifikation durch den Anwender visualisiert werden. Damit kann die Sicherheit des Verfahrens gesteigert werden.

Sobald die zu druckende Struktur inkl. Aussparungen berechnet ist, berechnet der Struktur-Umrechnungsalgorithmus, die Typen der Aussparungen (z. B. Technische Gebäudeausstattung wie Steckdosen, LAN-Boxen etc., Fenster, Türen) und generiert weitere/neue Flächendaten für Details (Fachjargon in Baubranche) für die Aussparungen, z. B. Laibung (z. B. für Fenster), Elektroplanungsdetails (wie bspw. eine Verdickung der Wand, um eine Steckdose einsetzen zu können etc.) je nach Typ der Aussparung.

In einer weiteren bevorzugten Ausführungsform der Erfindung sind die berechneten Filamentstrukturdaten in einem Zwischenschritt, vorzugsweise in einem Listenformat, exportierbar und modifizierbar und können z.B. in modifizierter Form dem Verfahren zurückgespeist und weiter prozessiert werden. Dies hat den Vorteil, dass die automatisch berechneten Filamentstrukturdaten an eine externe Instanz (z.B. an den planenden Architekten und/oder den Bauherrn und/oder den Betreiber des 3D-Druckers) weitergeleitet werden können. Auf dieser externen computer-basierten Instanz können dann - bedarfsweise - Modifikationen vorgenommen werden. Daraufhin wird ein modifizierter Filamentstrukturdatensatz erzeugt und kann an den (computer-basierten) Transformator zur Ausführung des vorstehend beschriebenen Verfahrens zurückgespielt werden. Die Schritte des Berechnens von Steueranweisungen und die Übermittlung der berechneten Steueranweisungen erfolgt dann auf Basis der modifizierten Filamentstrukturdaten, wie sie von der externen Instanz erfasst worden sind.

Vorstehend wurde die Lösung der Aufgabe anhand des computer-implementierten Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf einen Transformator, ein System oder auf ein Computerprogrammprodukt gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Unter Berücksichtigung der Church'schen These ist eine Software-Implementierung (Verfahren) zumindest unter dem Gesichtspunkt der Berechenbarkeit äquivalent zu einer Hardware-Implementierung (Vorrichtung, Transformator).

In einem weiteren Aspekt bezieht sich die vorliegende Erfindung auf einen Transformator zur Ausführung eines Verfahrens, wie vorstehend beschrieben, zur Ansteuerung eines 3D-Druckers für ein additives Fertigungsverfahren, insbesondere für ein Filament Printing, von Strukturen eines Gebäudes oder eines Bauwerkes oder Teilen davon mittels flüssiger oder pulverförmiger druckbarer Baustoffe. Dazu umfasst der Transformator:

- Eine CAD-Schnittstelle zum Einlesen eines 3D-Modells, insbesondere eines BIM-fähigen 3D-Modells, in dem die Strukturen in Strukturdaten in einem ersten Konstruktionsformat identifizierbar repräsentiert sind;
- Eine Druckerschnittstelle zum Einlesen von Druckerparametern, die Anforderungen und/oder Konstruktionsvorgaben des 3D-Druckers repräsentieren;
- Einen Prozessor zum Ausführen eines Struktur-Umrechnungsalgorithmus, der aus den in dem ersten Konstruktionsformat repräsentierten Strukturdaten, Filamentstrukturdaten in einem zweiten Konstruktionsformat für eine Filamentstruktur berechnet in Abhängigkeit von den eingelesenen Druckerparametern; wobei der Prozessor weiterhin zum Berechnen von Steueranweisungen auf Basis der berechneten Filamentstrukturdaten bestimmt ist;
- Einer Ausgabeschnittstelle, die dazu ausgebildet ist, zumindest die vom Prozessor berechneten Steueranweisungen zur Ansteuerung des 3D-Druckers bereitzustellen und an den 3D-Drucker zu übermitteln.

Vorzugsweise umfasst die Ausgabeschnittstelle eine Benutzerschnittstelle, auf der die berechneten Steueranweisungen ausgegeben werden können. Dieser Schritt dient zur Verifikation der Steueranweisungen durch den Anwender. Da die Steueranweisungen allerdings nur durch geschultes Personal nachvollzogen werden können und selten unmittelbar verständlich sind, ist folgende Ausführung vorgesehen.

In einer bevorzugten Ausführungsform der Erfindung können auf der Benutzerschnittstelle Visualisierungsdaten für die zu druckende Struktur bereitgestellt und ausgegeben werden. Die Visualisierungsdaten werden aus den berechneten Filamentstrukturdaten erzeugt. Dies bietet den wesentlichen Vorteil, dass die zu druckende Struktur in der zu druckenden Version visualisiert werden kann. Die zu druckende Struktur kann somit einfach und effizient vom Anwender verifiziert oder falsifiziert werden.

Vorzugsweise wird zumindest ein Ergebnisdatensatz erzeugt:

1. Filamentstrukturdaten, aus denen Modelldaten zur Ansteuerung des 3D-Druckers (hier auch Steueranweisungen genannt) berechnet werden.

Kumulativ kann optional noch ein weiterer Ergebnisdatensatz erzeugt werden, nämlich in Form von:
2. Visualisierungsdaten, die aus den Filamentstrukturdaten und/oder aus den Steueranweisungen berechnet werden und Modelldaten zur Visualisierung der zu druckenden Struktur (Visualisierungsmodell genannt) repräsentieren.

Das Visualisierungsmodell, insbesondere ein volumenbasiertes Visualisierungsmodel, zeigt das physikalisch zu druckende Gebäude oder Bauteil in seiner typischen mehrschaligen Extrusionsstruktur und stellt die abgerundeten Wandecken und Aussparungsvarianten dar. Das Visualisierungsmodell kann in einer weiteren vorteilhaften Ausführungsform der Erfindung mit Annotationsdaten, umfassend z.B. Bauteil- und Materialinformationen, angereichert werden. Das Visualisierungsmodell kann als BIM-Modell an externe Instanzen, die z.B. dem Bauherren und/oder Architekten zugeordnet sind, übergeben werden.

Parallel oder in einem nach- oder vorgelagerten Verfahrensschritt wird ein Druckmodell erstellt, insbesondere ein flächenbasiertes Druckmodell, welches durch vertikale Flächen die Mittelachsen der zu druckenden Filamente vorgibt. Das Druckmodell kann einem Slicingalgorithmus bereitgestellt werden. Der Slicingalgorithmus kann auf einer externen Instanz implementiert und/oder ausgeführt werden. Das Druckmodell enthält Steueranweisungen und dient als Grundlage für die Erzeugung des Toolpaths bzw. Werkzeugwegs des Druckkopfes.

In einem weiteren Aspekt betrifft die Erfindung ein System mit einem Transformator, wie vorstehend beschrieben, wobei das System den 3D-Drucker umfasst.

In einem weiteren Aspekt betrifft die Erfindung ein Computerprogrammprodukt, umfassend ein Computerprogramm mit Befehlen, die bei Ausführung des Computerprogramms durch einen Computer diesen veranlassen, das Verfahren wie vorstehend beschrieben auszuführen.

In der folgenden detaillierten Figurenbeschreibung werden nicht einschränkend zu verstehende Ausführungsbeispiele mit deren Merkmalen und weiteren Vorteilen anhand der Zeichnung besprochen.

Kurze Beschreibung der Figuren

Fig. 1    zeigt exemplarisch einen 3D-Drucker mit Druckkopf zum Filamentdruck eines Gebäudes;
Fig. 2    zeigt eine schematische Übersichtsdarstellung eines Transformators zur Transformation eines Architekturmodells in Steueranweisungen für einen 3D-Drucker;
Fig. 3    ist ein Ablaufdiagram des Verfahrens gemäß einer bevorzugten Ausführungsform der Erfindung;
Fig. 4    zeigt eine weitere perspektivische Darstellung des Druckkopfes des 3D-Druckers;

Fig. 5    zeigt möglichen Funktionen des Struktur-Umrechnungsalgorithmus;

Fig. 6    zeigt eine tabellarische Aufstellung zur Transformation der Strukturdaten in Filamentstrukturdaten und

Fig. 7a,b    zeigt in einer schematischen Darstellung eine Aussparung ohne (7a) und mit (7b) Düsenversatzvermeidungsfunktion.

## Detaillierte Beschreibung der Erfindung

Im Folgenden wird die Erfindung in Zusammenhang mit den Figuren näher beschrieben.

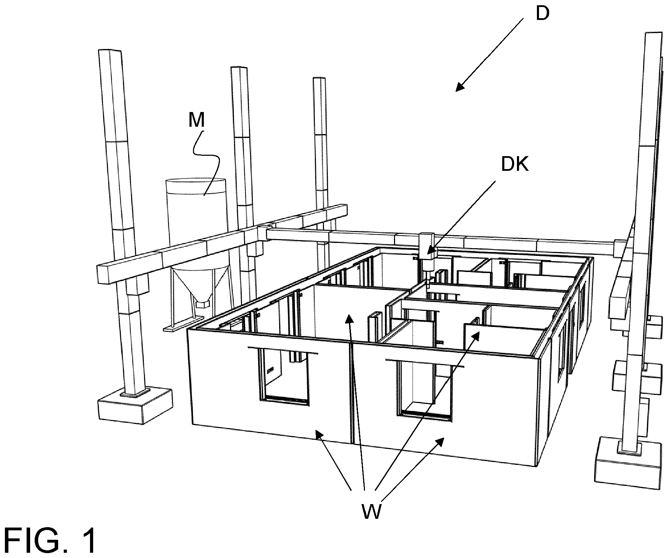

**Fig. 1** zeigt in einer schematischen perspektivischen Darstellung ein Haus als Beispiel für ein Gebäude, das mit einem 3D-Drucker D gedruckt werden soll. Das Haus umfasst mehrere zu druckende vertikale Strukturen bzw. Wände W. Der 3D-Drucker ist als Protaldrucker ausgebildet und hat eine gerüstartige oder portal-artige Struktur, an der ein Druckkopf DK beweglich gelagert ist, um Steueranweisungen s umzusetzen und sich auf einer vorgegebenen Trajektorie zu bewegen. Der 3D-Drucker D wird vorzugsweise mit flüssigem Beton und/oder mörtelartigen Baumaterialien bzw. Baustoffen betrieben, insbesondere mit Ortbeton, der vor Ort in einem Mischer M gemischt wird. Zur Versorgung des Druckkopfes DK mit Beton sind Versorgungsleitungen vorgesehen. Wie in Fig. 1 schematisch dargestellt, weist die Portalstruktur des Druckers D eine Größe auf, die an die Größe des zu druckenden Gebäudes angepasst ist, diese aber übersteigt, damit der Druckkopf DK alle Bereiche des zu druckenden Gebäudes erreichen kann.

Für den 3D-Betondruck von Gebäude- oder Bauwerksstrukturen muss zunächst der Drucker D an der vorgesehenen Position aufgebaut werden. Zur Kalibrierung wird vorzugsweise ein Trockentest des Druckvorgangs ohne Material durchgeführt. Hierfür wird der zuvor generierte G-Code über eine Web-Schnittstelle an den Drucker D übergeben bzw. hochgeladen, der über ein Netzwerk mit dem Computer verbunden ist. Nach zwei bis drei korrekt ausgeführten Schichten (layers) ist davon auszugehen, dass der Konstruktionsdrucker richtig kalibriert ist. Das Betongemisch kann nun von einer Mischpumpe M an den Druckkopf DK geleitet werden. Bevor der finale Start des Druckvorgangs ausgelöst wird, kann vorerst über eine manuell ausgelöste Extrusion eine geringe Materialmenge abgelegt werden, an der das Fließverhalten überprüft wird. Während der Drucker D das Betongemisch filamentweise ablegt, werden Verbindungsanker zwischen den Schalen und die Stürze für Fenster und Türen eingelegt.

Bisherige Verfahren aus dem Stand der Technik basieren darauf, dass das 3D-Modell (Architekturmodell) in einem zeitaufwendigen und fehleranfälligen Prozess einer händischen Remodellierung unterzogen werden muss, bevor es an den 3D-Betondrucker zur Ausführung übergeben werden kann. Die bisherige händische Remodellierung kann potentiell mehrere Tage in Anspruch nehmen. Die Erfindung schlägt vor, diesen Prozess zu automatisieren. Zudem wird ein flächenbasiertes Druckmodell und optional, aber vorzugsweise ein BIM-Visualisierungsmodell auf der gleichen Basis erzeugt und sind somit in ihrer Struktur identisch zueinander. Durch die Einbindung von variablen Parametern wie z.B. der Filamentbreite und/oder des Kanten- und/oder Eckenradius sollen nachträgliche Änderungswünsche innerhalb weniger Sekunden nachgeneriert werden und schaffen damit mehr Transparenz bei der Ausgabe des Druckmodells.

Um die Sicherheit und Zuverlässigkeit der algorithmischen Umsetzung der Modelldaten (Architekturmodell in 3D-Druckmodell) zu garantieren, ergeben sich für den Struktur-Umrechnungsalgorithmus verschiedene Anforderungen, u.a. an den Input und damit die Modellierung des Architekturmodells hinsichtlich der Geometrie und Klassifizierung. In einer bevorzugten Ausführungsform der Erfindung kann es vorgesehen sein, dass zumindest folgende Inputdaten erfasst werden:

-    Wandaufbaudaten, die den Wandaufbau (Innenwand, Außenwand), Wandtyp (mit oder ohne Dämmung) und/oder Kerndaten (mit oder ohne Betonkern) repräsentieren;

-    Wandöffnungsdaten, die insbesondere Wandöffnungen (insbesondere für Fenster und Türen) repräsentieren, um die Dichtigkeit sicherzustellen;

-    Überhangsdaten, die einen Überhang der Wand repräsentieren; diese unterscheiden sich von Material zu Material, z.B. kann der Überhang 10° bei einer Druckhöhe von 1m betragen; diese Formel ist jedoch auf Basis von neuem Erfahrungswissen konfigurierbar;

-    Ankerdaten, die die Anzahl von Wandankern repräsentieren; und/oder

-    Druckdüsendaten, die repräsentieren, welche Druckdüse, für welchen Wandaufbau bestimmt werden soll; alternativ oder kumulativ können die Druckdüsendaten noch indizieren, ob seitliche Führungsflächen (flaps) an der Druckdüse vorgesehen sind, um die gedruckte Schicht glattzuziehen.

Die erzeugten Filamentstrukturdaten bzw. das erzeugte 3D-Druckmodell beeinflusst zwangsläufig das Slicing bzw. die Erzeugung des G-Codes und damit das physisch gedruckte Gebäude. Zum einen wird ein geometrisch korrektes Flächenmodell benötigt, welches von der Slicing Software gelesen und weiterverarbeitet werden kann. Auf der anderen Seite erlaubt die schnelle Anpassungsfähigkeit des Algorithmus eine Optimierung verschiedener Gebäudedetails und kann so für das experimentelle Drucken verschiedener Varianten genutzt werden.

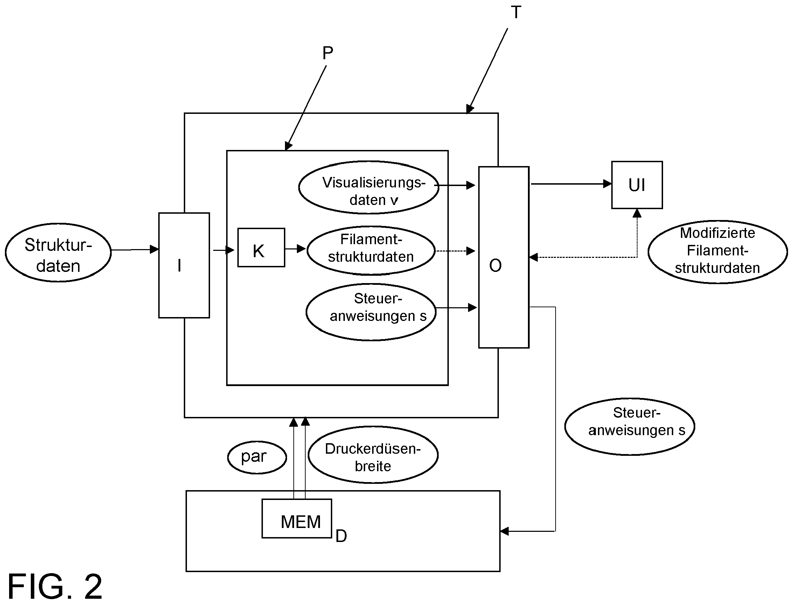

Wie in **Fig. 2** gezeigt, müssen die Strukturdaten aus dem Architektenmodell von dem Transformator T eingelesen werden. Dies erfolgt mittels der CAD-Schnittstelle I, die als InputSchnittstelle dient. Der Transformator T dient zur Ausführung des dort implementierten Struktur-Umrechnungsalgorithmus. Der Struktur-Umrechnungsalgorithmus verrechnet und berücksichtigt Parameter par, um die eingelesenen Strukturdaten in Filamentstrukturdaten zu transformieren. Die Parameter par können drucker-spezifische Parameter, wie z.B. Düsenbreite, Druckkopfgeschwindigkeit, Layerhöhe, Abrundungsradius, Düsenversatz und/oder Layerzeit und Prozess-bezogenen Parameter (z.B. material-spezifische Parameter, wie die Abbindezeit des Beton) umfassen. Vorzugsweise wird zumindest eine Druckerdüsenbreite an den Transformator übermittelt. Alternativ oder kumulativ kann die Druckerdüsenbreite auch über die UI eingelesen werden. Die vom Transformator T und insbesondere von dem Struktur-Umrechnungsalgorithmus erzeugten Filamentstrukturdaten, Steueranweisungen s und /oder Visualisierungsdaten v können über eine Ausgabeschnittstelle (Output) O ausgegeben werden. Die Steueranweisungen s werden an den 3D-Drucker D zur Ansteuerung weitergeleitet. Die Parameter par können direkt von einem Speicher MEM des Druckers eingelesen werden.

Nach dem Einlesen der Strukturdaten müssen die Daten in einem Klassifikator K klassifiziert werden. Im Wesentlichen gibt es bei der Klassifizierung von Gebäudeelementen zwei verschiedene Modellierungsarten: Die layerorientierte Modellierung sowie die bauteilorientierte Modellierung. Während bei AutoCAD im Normalfall noch mit einem klassischen Layersystemen gearbeitet wird, bei dem die gezeichneten Objekte zur Organisation nach Funktion und Zweck auf zuvor erstellten Layern abgelegt werden (Autodesk 2019), arbeiten Revit und ArchiCAD bauteilorientiert. Hier werden die Objekte aus einer hinterlegten Bauteildatenbank erzeugt und besitzen direkt die zugehörige Kategorie, Klasse und Typ. Im Hinblick auf die Generierung, muss der Algorithmus die Gebäudeelemente also sowohl nach einem hinterlegten Layer als auch nach einer bestimmten Bauteilklasse filtern können. Dabei muss die Klassifizierung so vorgenommen werden, dass in einem ersten Schritt sämtliche nichtgedruckte Gebäudeelemente, wie alle herkömmlich hergestellten Strukturen gefiltert werden, sodass nur noch die zu druckenden Strukturen (z.B. Wände) als Grundlage für den weiteren Verlauf der Transformation vorliegen. Die Klassifizierung oder Indizierung der Datensätze kann nach unterschiedlichen Kriterien erfolgen, z.B. Bauteiltyp - hierarchisch strukturiert (z.B. Wandstruktur, insbesondere Außen- oder Innenwand und insbesondere Wandtyp, um automatisch zu unterscheiden, ob es sich um eine gedämmte, ungedämmte oder eine Volldruckwand handelt). Nach der Klassifikation des Klassifikators K sind die Daten nach den jeweiligen Kriterien filterbar.

Wie bei der Klassifizierung, gibt es auch bei der dreidimensionalen Modellierung zwei Ansätze: So können Volumenkörper über ein "Boundary Representation" (BREP) Methode oder ein "Constructive Solid Geometry" (CSG) Verfahren erzeugt werden. Da die Wände eines in Revit, ArchiCAD oder AutoCAD erstellten Architekturmodells jeweils auf beide Arten modelliert werden können, insbesondere wenn es sich um geneigte oder runde Wände handelt, kann das hier beschriebene Verfahren eine BREP- und eine CSG-Geometrie verarbeiten.

Je nach bauphysikalischer Funktion kann eine Wand aus einem Material bestehen oder sich aus den in einem Bauteiltyp definierten oder rein zeichnerisch miteinander verbundenen Wandschichten zusammensetzen. Diese Zusammensetzung der unterschiedlichen Schichtbreiten sowie die Höhe eines Wandabschnitts sollen durch den Struktur-Umrechnungsalgorithmus interpretiert werden. Daneben gibt es nun insbesondere durch die neue Gestaltungsfreiheit eines 3D-gedruckten Gebäudes eine Vielzahl möglicher Wandverläufe und -verbindungen sowie die Möglichkeit, Einrichtungsgegenstände wie z.B. Kaminöfen direkt mitzudrucken.

Der Transformator T umfasst einen Prozessor P, der zur Ausführung des Struktur-Umrechnungsalgorithmus ausgebildet ist. Die berechneten Filamentstrukturdaten können zum Zwecke der Verifikation auf der Ausgabeschnittstelle O ausgegeben. Der Anwender kann an einem externen Gerät mit einer Benutzerschnittstelle UI Eingaben tätigen, um die berechneten Filamentstrukturdaten zu modifizieren und modifizierte Filamentstrukturdaten über die (zweiseitige) Schnittstelle an den Prozessor P zurück zu übermitteln, die dann für die Berechnung der Steueranweisungen s verwendet werden. In einer bevorzugten Ausführungsform der Erfindung werden auf der Ausgabeschnittstelle O auch Visualisierungsdaten v ausgegeben, die eine Visualisierung aller zu druckenden Strukturen W oder des zu druckenden Gebäudes repräsentieren. Auch hier können Korrekturen vorgenommen werden über eine Modifikation und dem Erzeugen von modifizierten Filamentstrukturdaten, die dem Prozessor P übermittelt werden.

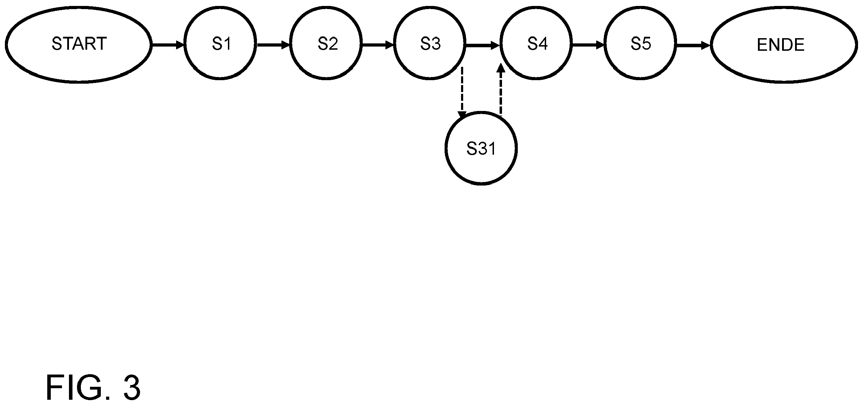

**Fig. 3** ist ein Ablaufdiagram des Verfahrens gemäß einer bevorzugten Ausführungsform der Erfindung. Nach dem Start des Verfahrens werden in Schritt S1 die Daten des 3D-Architekturmodells über die Inputschnittstelle I eingelesen. In Schritt S2 werden die Druckerparameter par eingelesen. In Schritt S3 wird der Struktur-Umrechnungsalgorithmus ausgeführt, um aus den eingelesenen Daten die Filamentstrukturdaten zu erzeugen. Fakultativ kann in Schritt S31 eine Verifikation erfolgen, indem Visualisierungsdaten v auf der Ausgabeschnittstelle O ausgegeben werden. Da der Schritt optional ist, ist er in FIG. 3 gepunktet eingezeichnet. Die Visualisierungsdaten v sind interaktiv, so dass diese mittels entsprechender Anwendereingaben auch verändert werden können. Der Anwender kann modifizierte Visualisierungsdaten eingeben, die dann in Schritt S4 zur Steueranweisungen s umgerechnet werden. In Schritt S5 werden die berechneten Steueranweisungen s an den 3D-Drucker D zur Ansteuerung desselben übermittelt. Danach kann das Verfahren enden oder wiederholt ausgeführt werden.

Das Verfahren und insbesondere der Struktur-Umrechnungsalgorithmus kann eine Referenzierung der Wandobjekte (als Beispiel einer zu druckenden Struktur) umfassen. Die Referenzierung kann durch einen Referenzierungsalgorithmus ausgeführt werden. Als Eingangsdaten werden dem Referenzierungsalgorithmus das eingelesen 3D-Modell bereitgestellt, der daraus die für den Betondruck relevanten Wandstrukturen extrahiert. In diesem Referenzierungsalgorithmus werden sämtliche nicht druckbaren Bauteile aus dem Modell gefiltert und somit garantiert, dass der Konstruktionsdrucker nur die zu druckenden Strukturen, Bauteile bzw. Wandobjekte erhält.

Kumulativ oder alternativ kann der Struktur-Umrechnungsalgorithmus ein Erzeugen der Laibungen, Stürze und/oder Supportstrukturen umfassen. Dies kann durch einen Supportalgorithmus implementiert werden. Als Eingangsdaten dienen die Abzugskörper der finalen Aussparungsdetails, aus denen der Supportalgorithmus Laibungen, Supportstrukturen und/oder Abzugskörper für die Stürze berechnet. Auf Basis der Aussparungsdetails werden die orthogonal zur Filamentachse verlaufenden Laibungen und zugehörigen Supportstrukturen erzeugt. Für die einzulegenden Stürze oberhalb der Aussparungen werden Abzugskörper erstellt. Der Begriff "Supportstrukturen" bezeichnet hier Unterstützungsstrukturen, die zur Stützung der zu druckenden Struktur dienen. Das dazu eingesetzte Material kann sich - muss sich aber nicht - vom Druckmaterial unterscheiden und dient dem Abstützen von filigranen oder überhängenden Strukturen, die ohne diese Supportstrukturen fertigungsbedingt der Schwerkraft "zum Opfer fallen" würden. Grundsätzlich wird bei der additiven Fertigung auf eine bestehende Schicht die nächste Schicht aufgetragen. Bei komplexeren Geometrien ist dies aber nicht immer möglich. Für diese Situationen gibt es die Supportstrukturen.

Kumulativ oder alternativ kann der Struktur-Umrechnungsalgorithmus mehrschalige Wandstruktur- und Filamentachsen erzeugen. Dazu dient ein Filamentalgorithmus. Als Input dienen Vollwände als Volumenkörper (traditionell geplant oder bereits als Filamente mit Volumen) und als Output werden mehrschalige Wandstruktur und Filamentachsen als vertikales Flächenmodell erzeugt. Der Filamentalgorithmus dient zur Erzeugung einer mehrschaligen Filamentwandstruktur für den 3D Betondruck. Abhängig von der gewählten Breite der physischen Düsenöffnung verändert sich die digital geplante Filamentbreite automatisch und die für das Druckmodell relevante Lage der Filamentmittelachsen.

Kumulativ oder alternativ kann der Struktur-Umrechnungsalgorithmus eine Integration der TGA Aussparungen und Dehnungsfugen umfassen. Dies wird durch einen Aussparungsalgorithmus implementiert. Dem Aussparungsalgorithmus werden als Input TGA-Planungsdaten als BIM Modell oder Lage/Abmessungen in Koordinatenform bereitgestellt, aus denen automatisch Abzugskörper für die TGA Aussparungen und Dehnungsfugen berechnet werden. Die Aussparungen für TGA Installationen (Elektro/Heizung-Lüftung-Sanitär) werden durch Abzugskörper in das Modell geschnitten. Für eine Steckdose (10 cm Höhe) werden z.B. 5 Layer je 2 cm Höhe ausgelassen. Um den durch das Aussetzen des Druckvorgangs bzw. Druckmaterials verursachten Düsenversatz zu vermeiden, werden die Enden der Aussparungen orthogonal in den Hohlraum der Wand gelegt.

Kumulativ oder alternativ kann der Struktur-Umrechnungsalgorithmus eine Analyse und/oder Adaption der Fenster- und/oder Tür-Aussparungen umfassen. Dies kann durch einen Adaptionsalgorithmus implementiert sein. Der Adaptionsalgorithmus benötigt als Input die Fensteraussparungen als Abzugskörper, um daraus auf druckbare Details angepasste Abzugskörper zu berechnen. Aufgrund der für den 3D-Betondruck spezifisch angepassten Aussparungsdetails (u.a. abhängig von der Düsenbreite), können an dieser Stelle deren Lage angepasst und/oder deren lichte Maße verkleinert bzw. vergrößert werden.

Kumulativ oder alternativ kann der Struktur-Umrechnungsalgorithmus ein Abrunden der vertikalen Kanten mit einem vorkonfigurierbaren definierten Radius umfassen. Dies kann mittels einem Radiusalgorithmus implementiert werden. Der Radiusalgorithmus verarbeitet als Input das vollständige Druckmodell, um daraus das vollständige Druckmodell mit abgerundeten vertikalen Kanten zu berechnen. Um eine maximale lineare Verfahrlänge und damit flüssige Kurven und schnelle Druckgeschwindigkeiten zu ermöglichen, werden alle vertikalen Kanten des Modells mit einem definierten Radius abgerundet. Aus dem finalen Modell kann die optimale Druckerkonfiguration (LxBxH des Bauraumes), Druckdauer/Layerzeit sowie die Menge an Druckmaterial ermittelt werden.

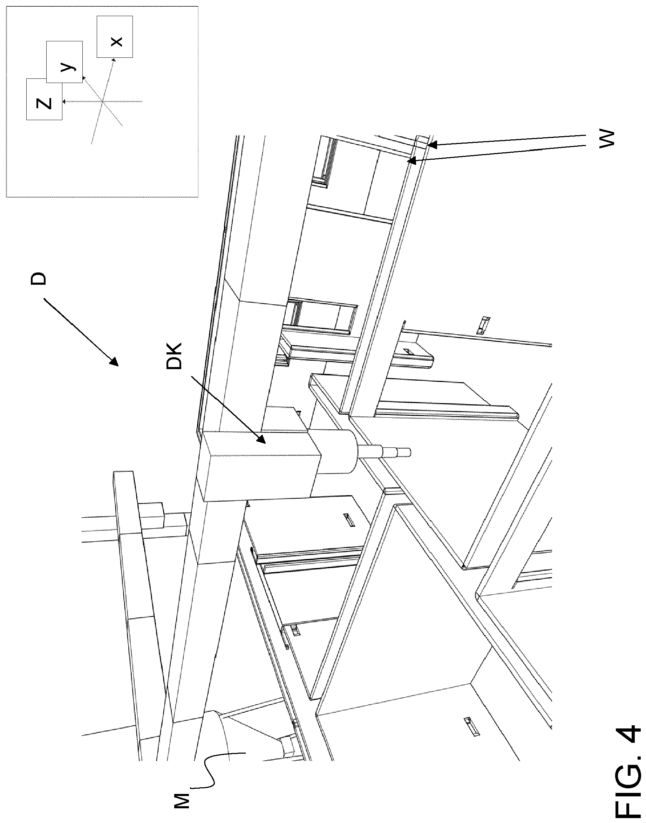

**Fig. 4** zeigt eine weitere perspektivische Darstellung des 3D-Drucker D. Der Druckkopf DK des Druckers D kann sich über entsprechende Aktoren an der Gantry-artigen Struktur in x, y, und z-Richtung gemäß der ihn instruierenden Steueranweisungen s und insbesondere gemäß einem Bewegungsabschnitt der Steueranweisungen, der die Bewegung bzw. Trajektorie des Druckkopfes definiert, Der Druckkopf DK umfasst eine Druckdüse (die quasi als Endeffektor zur Positionierung und Ablage des zu druckenden Materials fungiert). Die Druckdüse des Druckkopfes kann beweglich und insbesondere drehbar sein. Eine drehbare Druckdüse hat sich als vorteilhaft erwiesen, da damit auf technisch einfache Weise gekrümmte Radien oder gekrümmte oder gebogene Strukturen abgefahren werden können. Weiterhin kann sich der Druckkopf um eine Vertikalachse (z-Achse) drehen. In Fig. 4 sind die Filamentstrukturen gut sichtbar, die in dem hier gezeigten Beispiel aus zwei beabstandeten Filamenten für eine Wand bestehen, die einen Hohlraum bilden. In den Hohlraum können dann Armierungen eingesetzt werden, die dann später mit Füllmaterial (z.B. Beton) verfüllt werden. Die Armierungen sind in Fig. 4 ganz rechts mit 3 vertikalen Strichen gekennzeichnet.

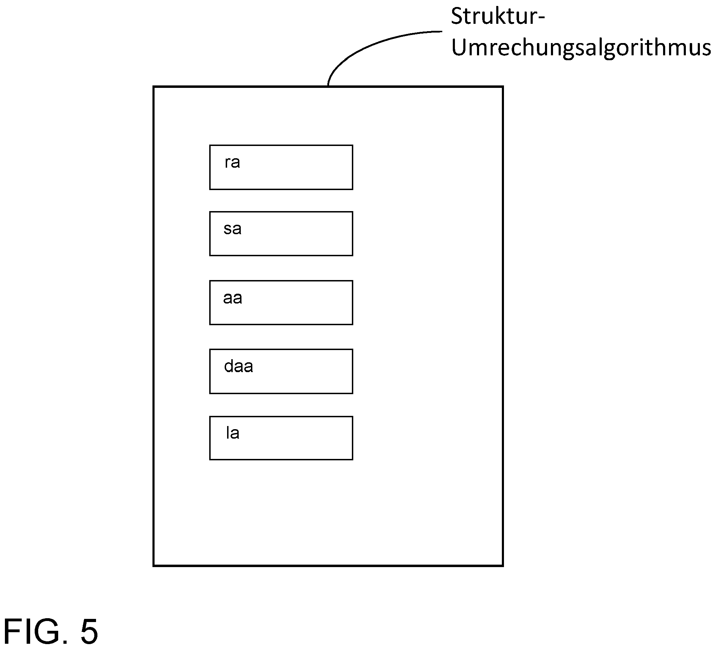

**Fig. 5** ist eine schematische Darstellung von möglichen, optionalen Funktionen des Struktur-Umrechnungsalgorithmus. Der Struktur-Umrechnungsalgorithmus kann eine Radius-Algorithmus ra, einen Slicingalgorithmus sa, einen Abzugskörper-Algorithmus aa, einen Detailaussparungsalgorithmus daa und/oder einen Layer-Algorithmus la umfassen.

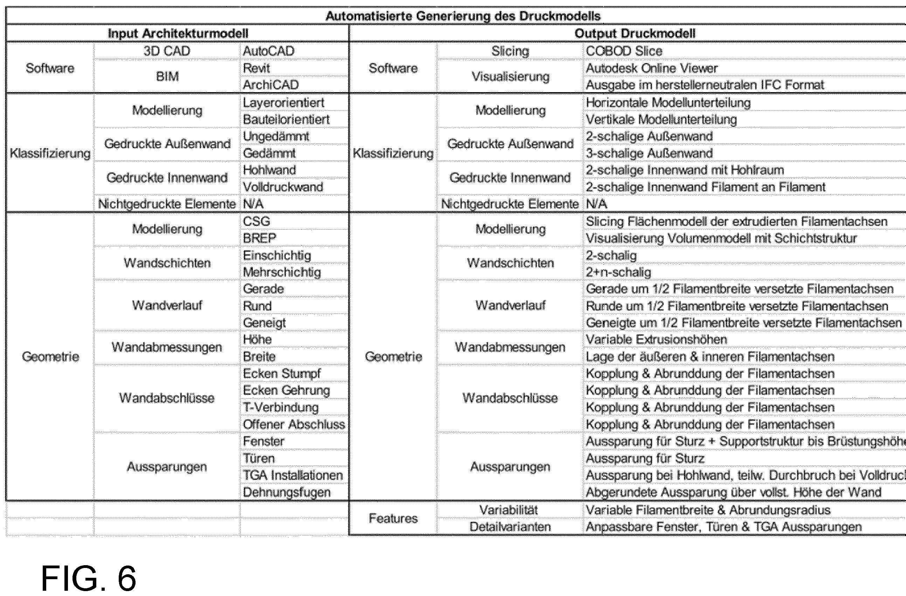

Der Struktur-Umrechnungsalgorithmus ist ausgelegt, die eingelesenen Strukturdaten des Architekturmodells mit Hilfe des Klassifikators K (Fig. 2) zu klassifizieren. Dann können die zu druckenden und/oder vom Architekten geplanten Strukturen referenziert werden, so dass sie im weiteren Verfahren zugreifbar sind. Auf Basis der eingelesenen Wandstruktur werden dann die Anzahl der Filamentstrukturen bestimmt (vgl. Fig. 6). Hier ist die folgende Funktion f zur Bestimmung der Anzahl der Filamentwände vorgesehen:

$$f: Anzahl_{Strukturdaten} -> Anzahl + 1 _{Filamentstrukturdaten}.$$

Aus einer Vollwand in den Strukturdaten des Architekten wird als eine 2-schalige Filamentstrukturwand in den Filamentstrukturdaten, die vom Drucker D gedruckt werden. Aus einer zwei-schichtigen Wand wird eine 3-schichtige Filamentwand etc.

Nachdem die Anzahl der Filamentstrukturen bestimmt wurde, werden die Positionen der Filamentstrukturen bestimmt und insbesondere die Filamentachse (als Mittellängsachse der Wand). Anschließend kann eine Analyse der Aussparungen (Welcher Aussparungstyp (z.B. Fenster oder Türe oder Versorgungsleitungen etc.), welche Position, welche Größe) und ggf. Anpassungen an den Aussparungen vorgenommen werden. Die Anpassungen können z.B. vorkonfiguriert und in einer Anpassungsdatenstruktur gespeichert sein.

Anschließend werden die Laibungen und Stürze und Supportstrukturen erzeugt und in den Filamentstrukturdaten gespeichert.

Weiter können Aussparungen der technischen Gebäudeausstattung, TGA, sowie Dehnungsfugen integriert werden. Die Dehnungsfugen können manuell über eine Benutzerschnittstelle, UI, eingegeben werden. Alternativ können die Dehnungsfugen auch automatisch berechnet werden. Dazu kann ein komplexes statisches Modell angewendet werden, welches die Ausdehnung des Materials in Abhängigkeit der zu erwartenden Region ("Wüste vs. Gebirge"), den auftretenden Lasten und den Materialparameter (z.B. E-Modul) berechnet.

Die vertikalen Kanten werden mit dem Radius-Algorithmus mit konfigurierbaren Radien abgerundet. Der minimale Radius wird von der Filamentbreite mitbestimmt. Der Anwender kann aber auch größere Radien angeben/definieren.

Abschließend können die relativen Höhen der zu druckenden Strukturen berechnet werden und es kann - falls notwendig - eine Unterteilung der zu druckenden Strukturen in horizontale und/oder vertikale Druckabschnitte ausgeführt werden. Dies ist abhängig von der Größe der zu druckenden Struktur und des Druckers D.

Grundsätzlich ist die richtige Interpretation der Wandverläufe und Aussparungen wichtig zur fehlerfeien Erzeugung von Steueranweisungen s.

Das erzeugte Druckmodell besteht aus vertikalen Flächen, die in der CAD-Umgebung als Polysurfaces bezeichnet werden. Die Druckdatei sowie die darin enthaltene Geometrie müssen kompatibel zur Software des 3D-Druckers sein, damit diese einen fehlerfreien G-Code für den 3D-Betondrucker erzeugen kann. Das Visualisierungsmodell soll in einem nativen Format aus der visuellen Programmierschnittstelle exportiert werden und anschließend in einem Online Viewer abrufbar sowie im herstellerneutralen IFC-Format an über ein IT-Netzwerk angeschlossene Verarbeitungsknoten verschickt werden können.

Aufgrund der geringen Abbindezeit des druckbaren Betons von ca. 4 bis 90 min und vorzugsweise ca. 15-30 min, haben Versuche gezeigt, dass ein großflächiges Gebäude vor der Übergabe an den Slicingalgorithmus sa in sinnvolle horizontale und vertikale Abschnitte unterteilt werden muss. So wird sichergestellt, dass durch die Bewegung des Druckkopfes zwischen den aufeinanderfolgenden Schichten nicht zu viel Zeit vergeht. Zudem werden Druckpausen benötigt, um die eingelegten Fenster- und Türstürze anzubringen. Da diese Modellunterteilung ebenfalls mit dem Struktur-Umrechnungsalgorithmus gelöst werden soll, sollte bei den aufeinanderfolgenden Abschnitten eine Reihenfolge in die Klassifizierung der Flächenmodelle integriert werden. Bei dem für die Visualisierung vorgesehenen Visualisierungsdaten v muss geprüft werden, inwieweit sich die vorhandene Klassifizierung des Architekturmodells auf die druckbare Wandstruktur übertragen lässt. Aufgrund der durch die Abrundungsprozesse bedingten Koppelung von Außen- und Innenwänden sowie der Mehrschaligkeit der Filamente entstehen neue Wandsituationen, die sinngemäß zu klassifizieren sind.

Die für das Druckmodell benötigten Polysurfaces können durch das vertikale Extrudieren der Filamentachsen erzeugt werden, die jeweils exakt eine halbe Filamentbreite von den beiden Außenachsen der geplanten Struktur, z.B. Wand, entfernt liegen müssen. Dies soll sowohl bei geraden als bei auch runden Wandverläufen garantiert sein, seitlich geneigte Wandabschnitte müssen entlang des vorgesehenen Neigungswinkels der Wand extrudiert werden. Bei mehrschichtigen Wänden, wird eine weitere Filamentschale zwischen den äußeren Filamentachsen benötigt. Dabei soll die benötigte Extrusionshöhe der Filamente von der Eingabewand abgeleitet werden.

Eine besondere Herausforderung liegt in der Kopplung und Abrundung der verschiedenen Eckverbindungen, T-Verbindungen sowie bei offenen Wandabschlüssen.

Dasselbe gilt für die Anpassung der durch Abzugskörper erzeugten Aussparungsdetails, wie Fenster- und Türabschlüsse, bei denen neben einer abgerundeten, mehrschaligen Laibung durch den Struktur-Umrechnungsalgorithmus eine zusätzliche Aussparung mit der richtigen Einbindehöhe und -tiefe des über der Öffnung einzubringenden Sturzes eingerechnet werden muss. Bei den Fenstern wird zusätzlich eine gedruckte Supportstruktur benötigt, um die eindrehende Fensterlaibung auf Brüstungshöhe zu stützen.

Weitere Aussparungen sind für die direkte Integration von Installationen der technischen Gebäudeausstattung, TGA, vorgesehen, die je nach Einbindetiefe und der vorliegenden Wandbreite eine Öffnung in die Hohlwand zwischen den Filamenten oder einen Durchbruch durch mehrere Filamente benötigen. In die äußerste Filamentschale der Außenwand sind in regelmäßigen Abständen Dehnungsfugen einzubringen, um die bei der temperatur- und feuchtigkeitsbedingten Ausdehnung des Betons vorprogrammierte schädliche Rissbildung zu minimieren.

Um den 3D-Druck variabel gestalten zu können, sollen in erster Linie die Filamentbreite sowie der Abrundungsradius der Wandecken individuell und schnell anpassbar sein. Eine zu einem späteren Zeitpunkt in das Programm integrierbare automatisierte Variantenauswahl für die Fenster- und Türanschlüsse kann implementiert sein. Das Visualisierungsmodell v sollte auf Basis des Druckmodells erzeugt werden, um etwaige Abweichungen ausschließen zu können. Eine direkt in der visuellen Programmierschnittstelle erzeugte Schichtstruktur auf der Volumenoberfläche sollte ebenfalls geprüft werden.

**Fig. 6** zeigt einige Umrechnungsparameter die von dem Struktur-Umrechnungsalgorithmus angewendet werden. Hier ist z.B. ersichtlich, dass eine Vollwand in eine 2-schalige Filamentstruktur umgesetzt wird bzw. allgemeiner eine n-schichtige Wand in dem Architekturmodell in eine n+1-schichtige Filamentstruktur transformiert wird.

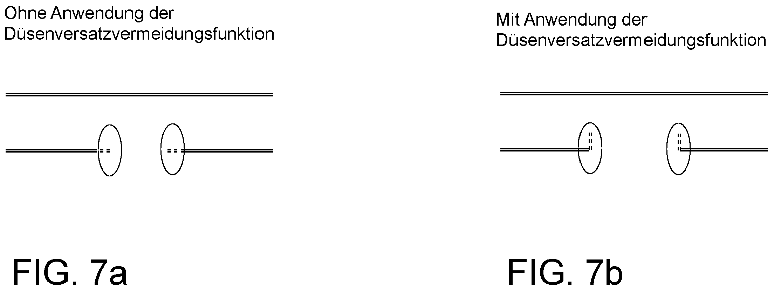

**Fig. 7** zeigt in einer schematischen Darstellung das Drucken von Aussparungen mit und ohne Ausführung einer Düsenversatzvermeidungsfunktion. **Fig. 7a** zeigt die Variante, in der die Düsenversatzvermeidungsfunktion nicht angewendet wird und dazu führen kann, dass Restmaterial auch nach Druckstopp in linearer Bewegungsrichtung abgelegt wird (dies ist durch die gepunktete Linie dargestellt). Die kritischen Stellen an den Rändern der Aussparung sind in Fig. 7a und b durch die Ellipsen gekennzeichnet. In **Fig. 7b** wird die Düsenversatzvermeidungsfunktion angewendet. Dazu führt die Druckdüse eine orthogonal nach innen gerichtete Bewegung aus und legt das Restmaterial in den Innenbereich der Hohlraumwandstruktur ab. Das überschüssige Druckmaterial, das nach Druckstopp-Anweisung aus der Druckdüse austritt ist wieder gepunktet dargestellt. Mit der Düsenversatzvermeidungsfunktion kann sichergestellt werden, dass die Aussparungen exakt in der Größe gedruckt werden, wie geplant und z.B. nicht durch den Austritt von Restmaterial verkleinert werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Portaldrucker angewendet werden kann, sondern auch für andere 3D-Drucker, die zum Filament Printing geeignet sind. Auch können alternativ oder kumulativ zu Beton andere Baustoffe angewendet werden. Des Weiteren können die Bauteile des Transformators auf mehrere physikalischen Produkte verteilt realisiert sein.

**Patentansprüche**

1. Computer-implementiertes Verfahren zur Ansteuerung eines 3D-Druckers (D) für ein additives Fertigungsverfahren, insbesondere ein Filament Printing, von Strukturen eines Bauwerkes mittels flüssiger oder pulverförmiger druckbarer Baustoffe umfassend folgende Schritte:

   - Einlesen (S1) eines 3D-Modells über eine CAD Schnittstelle (I), insbesondere eines BIM-fähigen 3D-Modells, in dem die Strukturen in Strukturdaten in einem ersten Konstruktionsformat identifizierbar repräsentiert sind;
   - Einlesen (S2) von Druckerparametern (par) über eine Druckerschnittstelle (DS), die Anforderungen und/oder Konstruktionsvorgaben des 3D-Druckers (D) repräsentieren;
   - Ausführen (S3) eines Struktur-Umrechnungsalgorithmus, der aus den in dem ersten Konstruktionsformat repräsentierten Strukturdaten, Filamentstrukturdaten in einem zweiten Konstruktionsformat für eine Filamentstruktur berechnet in Abhängigkeit von den eingelesenen Druckerparametern (par);
   - Berechnen (S4) von Steueranweisungen (s) auf Basis der berechneten Filamentstrukturdaten und
   - Übermittlung (S5) der berechneten Steueranweisungen (s) an den 3D-Drucker (D) zur Ansteuerung.

2. Verfahren nach Anspruch 1, bei dem die Steueranweisungen (s) in einem G-Code repräsentiert oder transformierbar sind, der von einer Steuerplatine des 3D-Druckers (D) eingelesen und direkt prozessiert werden kann.

3. Verfahren nach einem der vorhergehenden Ansprüche, bei dem das Verfahren und insbesondere das Berechnen (S4) von Steueranweisungen (s) ein Slicing der zu druckenden Struktur (W) umfasst, wobei das Slicing durch Ausführen eines Slicingalgorithmus erfolgt, der für die berechneten Filamentstrukturdaten für ausgewählte Strukturen in Abhängigkeit von den eingelesenen Druckerparametern (par) und/oder in Abhängigkeit von Vorgaben aus dem eingelesenen 3D-Modell Slicingdaten berechnet, die insbesondere eine Layerhöhe definieren.

4. Verfahren nach einem der vorhergehenden Ansprüche, bei dem Filamentstrukturparameter, insbesondere eine Breite jeweils einer zu berechnenden Filamentstruktur und/oder eine Layerhöhe für ein Slicing der Filamentstruktur, über entsprechende Konfigurationsfelder auf einer Benutzerschnittstelle (UI) konfigurierbar ist und wobei der Struktur-Umrechnungsalgorithmus auf Basis der Filamentstrukturparameter ausgeführt wird.

5. Verfahren nach einem der vorhergehenden Ansprüche, bei dem die Druckerparameter (par) eine Düsenbreite und/oder eine Druckgeschwindigkeit des Druckkopfes umfassen.

6. Verfahren nach einem der vorhergehenden Ansprüche, bei dem die Filamentstrukturdaten mittels eines BREP-Verfahrens (Boundary Representation) und/oder mittels eines CSG Verfahrens (Constructive Solid Geometry) erzeugt werden.

7. Verfahren nach einem der vorhergehenden Ansprüche, bei dem das Verfahren einen Radius-Algorithmus umfasst, der für alle oder ausgewählte benachbarte Strukturelemente, die einen Verbindungsbereich, insbesondere eine Verbindungskante, aufweisen, einen Radius berechnet, über den die beiden benachbarten Strukturelemente beim Druckvorgang verbunden werden.

8. Verfahren nach einem der vorhergehenden Ansprüche, bei dem der 3D-Drucker (D) ein Portaldrucker ist.

9. Verfahren nach einem der vorhergehenden Ansprüche, bei dem die Filamentstruktur zumindest ein Filamentstrukturelement umfasst, vorzugsweise zumindest zwei Filamentstrukturelemente mit zumindest einem Außenfilament, das das Bauwerk nach außen abgrenzt und zumindest einem Innenfilament, das das Bauwerk nach innen abgrenzt, wobei eine Außenfläche des Außenfilamentes und eine Außenfläche des Innenfilamentes im gedruckten Zustand einen Abstand voneinander aufweisen, der einer Breite der Struktur aus dem eingelesenen 3D-Modell entspricht.

10. Verfahren nach einem der vorhergehenden Ansprüche, bei dem das Verfahren und insbesondere der Struktur-Umrechnungsalgorithmus und/oder ein Abzugskörper-Algorithmus, mit einer visuellen Programmiersprache, insbesondere mit Rhino von Grasshopper implementiert ist/sind, die auf einer 64-Bit Windows Anwendung lauffähig ist.

11. Verfahren nach einem der vorhergehenden Ansprüche, bei dem das Verfahren neben den Steueranweisungen (s) Visualisierungsdaten (v), insbesondere zur 3D-Visualisierung, eines Baukörpers aus den berechneten Filamentstrukturdaten erzeugt und insbesondere als Verifikationsschritt (S31) auf einer Benutzerschnittstelle (UI) ausgibt.

12. Verfahren nach einem der vorhergehenden Ansprüche, bei dem Visualisierungsdaten (v) in einem standardisierten Format, insbesondere DWG und/oder IFC, exportierbar und an externe Instanzen übertragbar ist.

13. Verfahren nach einem der vorhergehenden Ansprüche, bei dem das Verfahren zumindest einen der folgenden Schritte umfasst:

   - Ausführen eines Abzugskörper-Algorithmus, der Aussparungen in den Strukturen (W) definiert und darauf basierend Aussparungsvolumendaten berechnet in Abhängigkeit von den eingelesenen Druckerparametern (par); und/oder
   - Koordinatentransformation der berechneten Daten, insbesondere der berechneten Filamentstrukturdaten, in ein Koordinatensystem des 3D-Druckers (D).

14. Verfahren nach dem unmittelbar vorhergehenden Anspruch, bei dem der Abzugskörper-Algorithmus eine Differenzoperation auf den berechneten Filamentstrukturdaten und den Abzugskörpervolumendaten ausführt, um positive Flächendaten zu berechnen, die die Summe aller Bereiche der zu druckenden Struktur repräsentieren.

15. Verfahren nach einem der vorhergehenden Ansprüche, bei dem die Filamentstrukturdaten in einem Zwischenschritt, vorzugsweise in einem Listenformat, exportierbar und modifizierbar sind und in modifizierter Form dem Verfahren zurückgespeist und weiter prozessiert werden zu können.

16. Verfahren nach einem der vorhergehenden Ansprüche, bei dem der Baustoff Beton und/oder Mörtel umfasst.

17. Transformator (T) zur Ausführung eines Verfahrens nach einem der vorangehenden Verfahrensansprüche zur Ansteuerung eines 3D-Druckers (D) für ein additives Fertigungsverfahren, insbesondere für ein Filament Printing, von Strukturen eines Bauwerkes mittels flüssiger oder pulverförmiger druckbarer Baustoffe, umfassend:

   - Eine CAD-Schnittstelle zum Einlesen eines 3D-Modells, insbesondere eines BIM-fähigen 3D-Modells, in dem die Strukturen in Strukturdaten in einem ersten Konstruktionsformat identifizierbar repräsentiert sind;
   - Eine Druckerschnittstelle zum Einlesen von Druckerparametern, die Anforderungen und/oder Konstruktionsvorgaben des 3D-Druckers repräsentieren;
   - Einen Prozessor zum Ausführen eines Struktur-Umrechnungsalgorithmus, der aus den in dem ersten Konstruktionsformat repräsentierten Strukturdaten, Filamentstrukturdaten in einem zweiten Konstruktionsformat für eine Filamentstruktur berechnet in Abhängigkeit von den eingelesenen Druckerparametern; wobei der Prozessor weiterhin zum Berechnen von Steueranweisungen auf Basis der berechneten Filamentstrukturdaten bestimmt ist;
   - Einer Ausgabeschnittstelle, die dazu ausgebildet ist, die vom Prozessor berechneten Steueranweisungen zur Ansteuerung des 3D-Druckers bereitzustellen und an den 3D-Drucker zu übermitteln.

18. System mit einem Transformator gemäß dem vorangehenden Anspruch, wobei das System den 3D-Drucker umfasst.

19. Computerprogrammprodukt, umfassend ein Computerprogramm mit Befehlen, die bei Ausführung des Computerprogramms durch einen Computer diesen veranlassen, das Verfahren gemäß einem der vorangehenden Verfahrensansprüche auszuführen.

FIG. 1

FIG. 2

FIG. 3

FIG. 4

Struktur-
Umrechungsalgorithmus

| ra |
|---|

| sa |
|---|

| aa |
|---|

| daa |
|---|

| la |
|---|

FIG. 5

| Automatisierte Generierung des Druckmodells | | | | | |
|---|---|---|---|---|---|
| **Input Architekturmodell** | | | **Output Druckmodell** | | |
| Software | 3D CAD | AutoCAD | Software | Slicing | COBOD Slice |
| | BIM | Revit | | Visualisierung | Autodesk Online Viewer |
| | | ArchiCAD | | | Ausgabe im herstellerneutralen IFC Format |
| Klassifizierung | Modellierung | Layerorientiert | Klassifizierung | Modellierung | Horizontale Modellunterteilung |
| | | Bauteilorientiert | | | Vertikale Modellunterteilung |
| | Gedruckte Außenwand | Ungedämmt | | Gedruckte Außenwand | 2-schalige Außenwand |
| | | Gedämmt | | | 3-schalige Außenwand |
| | Gedruckte Innenwand | Hohlwand | | Gedruckte Innenwand | 2-schalige Innenwand mit Hohlraum |
| | | Volldruckwand | | | 2-schalige Innenwand Filament an Filament |
| | Nichtgedruckte Elemente | N/A | | Nichtgedruckte Elemente | N/A |
| Geometrie | Modellierung | CSG | Geometrie | Modellierung | Slicing Flächenmodell der extrudierten Filamentachsen |
| | | BREP | | | Visualisierung Volumenmodell mit Schichtstruktur |
| | Wandschichten | Einschichtig | | Wandschichten | 2-schalig |
| | | Mehrschichtig | | | 2+n-schalig |
| | Wandverlauf | Gerade | | Wandverlauf | Gerade um 1/2 Filamentbreite versetzte Filamentachsen |
| | | Rund | | | Runde um 1/2 Filamentbreite versetzte Filamentachsen |
| | | Geneigt | | | Geneigte um 1/2 Filamentbreite versetzte Filamentachsen |
| | Wandabmessungen | Höhe | | Wandabmessungen | Variable Extrusionshöhen |
| | | Breite | | | Lage der äußeren & inneren Filamentachsen |
| | Wandabschlüsse | Ecken Stumpf | | Wandabschlüsse | Kopplung & Abrundung der Filamentachsen |
| | | Ecken Gehrung | | | Kopplung & Abrundung der Filamentachsen |
| | | T-Verbindung | | | Kopplung & Abrundung der Filamentachsen |
| | | Offener Abschluss | | | Kopplung & Abrundung der Filamentachsen |
| | Aussparungen | Fenster | | Aussparungen | Aussparung für Sturz + Supportstruktur bis Brüstungshöhe |
| | | Türen | | | Aussparung für Sturz |
| | | TGA Installationen | | | Aussparung bei Hohlwand, teilw. Durchbruch bei Volldruck |
| | | Dehnungsfugen | | | Abgerundete Aussparung über vollst. Höhe der Wand |
| | | | Features | Variabilität | Variable Filamentbreite & Abrundungsradius |
| | | | | Detailvarianten | Anpassbare Fenster, Türen & TGA Aussparungen |

FIG. 6

Ohne Anwendung der
Düsenversatzvermeidungsfunktion

Mit Anwendung der
Düsenversatzvermeidungsfunktion

# FIG. 7a

# FIG. 7b

Europäisches
Patentamt

European
Patent Office

Office européen
des brevets

# EUROPÄISCHER RECHERCHENBERICHT

**Nummer der Anmeldung**

**EP 21 19 1280**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MECHTCHERINE VIKTOR ET AL: "Large-scale digital concrete construction – CONPrint3D concept for on-site, monolithic 3D-printing", AUTOMATION IN CONSTRUCTION, ELSEVIER, AMSTERDAM, NL, Bd. 107, 28. August 2019 (2019-08-28), XP085856704, ISSN: 0926-5805, DOI: 10.1016/J.AUTCON.2019.102933 [gefunden am 2019-08-28] * Zusammenfassung * * Seite 3 – Seite 9 * * Seite 11 – Seite 14 * * Abbildungen 2,3,5,7,10-13 * ----- | 1-19 | INV. B33Y50/00 G06F30/13 ADD. G06F113/10 |
| X | Mathias Näther ET AL: , 31. Dezember 2017 (2017-12-31), Seiten 1-106, XP055708204, Gefunden im Internet: URL:https://www.irbnet.de/daten/rswb/17079004398.pdf [gefunden am 2020-06-23] * Zusammenfassung * * Seite 7 – Seite 9 * * Seite 16 – Seite 19 * * Seite 23 – Seite 26 * * Seite 36 – Seite 39 * * Seite 42 – Seite 44 * * Seite 63 – Seite 70 * ----- -/-- | 1-19 | |

**RECHERCHIERTE SACHGEBIETE (IPC)**

B33Y
G06F

Der vorliegende Recherchenbericht wurde für alle Patentansprüche erstellt

| Recherchenort | Abschlußdatum der Recherche | Prüfer |
|---|---|---|
| München | 31. Januar 2022 | Radev, Boyan |

EPO FORM 1503 03.82 (P04C03)

# EP 4 134 237 A1

Europäisches Patentamt
European Patent Office
Office européen des brevets

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DAVTALAB OMID ET AL: "Perspectives on a BIM-integrated software platform for robotic construction through Contour Crafting", AUTOMATION IN CONSTRUCTION, ELSEVIER, AMSTERDAM, NL, Bd. 89, 19. Januar 2018 (2018-01-19), Seiten 13-23, XP085360283, ISSN: 0926-5805, DOI: 10.1016/J.AUTCON.2018.01.006 * Zusammenfassung * * Seite 13, Spalte 16 – Seite 14, Spalte 21 * ----- | 1-19 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 31. Januar 2022 | Radev, Boyan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *A process classification framework for defining and describing Digital Fabrication with Concrete, https://doi.org/10.1016/j.cemconres.2020.106068 https://www.sciencedirect.com/science-/article/pii/S0008884619316709*
- **MECHTCHERINE, VIKTOR ; NERELLA, VENKATESH NAIDU.** 3 - D - Druck mit Beton: Sachstand, Entwicklungstendenzen, Herausforderungen. *Bautechnik,* 2018, vol. 95 (4), 275-287

- **MECHTCHERINE, VIKTOR ; NERELLA, VENKATESH NAIDU.** D - Druck mit Beton: Sachstand, Entwicklungstendenzen, Herausforderungen. *Bautechnik,* 2018, vol. 95 (4), 275-287
- **MEYER-BRÖTZ, FABIAN.** *3D Construction Printing,* 2019